# FASCICULE DE BREVET EUROPEEN

(11) **EP 2 921 611 B1**
(45) Date de publication et mention de la délivrance du brevet: **07.12.2016**
(21) Numéro de dépôt: 15160041.8
(22) Date de dépôt: 20.03.2015
(51) Int. Cl.: E04G 21/30, E06B 3/964, E06B 5/02, E06B 9/52, F16B 5/06, E04G 21/24, E06B 3/263, E06B 9/02, E06B 9/24, E06B 3/70

(54) **SYSTÈME TÉLESCOPIQUE D'OBTURATION D'UNE OUVERTURE**
TELESKOPSYSTEM ZUM VERSCHLIESSEN EINER ÖFFNUNG
TELESCOPIC SYSTEM FOR SEALING AN OPENING

(30) Priorité: 21.03.2014 FR 1452401; 21.03.2014 FR 1452400; 21.03.2014 FR 1452399
(43) Date de publication de la demande: 23.09.2015
(73) Titulaire: Chancerel, Philippe, 61550 Glos la Ferriere (FR)
(72) Inventeur: Chancerel, Philippe, 61550 Glos la Ferriere (FR)
(74) Mandataire: Rataboul, Xavier

(56) Documents cités:
- FR-A1- 2 961 549
- US-A- 4 495 979

## Description

La présente invention se rapporte à un montant télescopique prévu pour être positionné dans une ouverture, du type ouverture de porte ou de fenêtre délimitée par une huisserie ou de type délimitée par des murs adjacents afin de former un montant d'un cadre agencé pour accueillir un élément d'obturation, par exemple une bâche, ledit montant télescopique comprenant :
- un premier profilé externe comprenant une paroi frontale, une paroi dorsale et deux parois de connexion, chacune des parois présentant une face interne et une face externe, ledit premier profilé présentant une partie de lumière formant une cavité d'une première gorge sensiblement en forme de U, ladite paroi frontale comportant un orifice longitudinal formant une ouverture de ladite première gorge dont les parties adjacentes sont formées par deux lèvres internes s'étendant chacune d'une des parois de connexion, et
- un deuxième profilé interne comprenant une paroi frontale, une paroi dorsale et deux parois de connexion, chacune des parois présentant une face interne et une face externe, ladite face externe d'une desdites parois de connexion dudit deuxième profilé étant munie d'un balai au moins partiellement sur sa longueur, ledit deuxième profilé présentant une partie de lumière formant une cavité d'une deuxième gorge sensiblement en forme de U, ladite paroi frontale comportant un orifice longitudinal formant une ouverture de ladite deuxième gorge dont les parties adjacentes sont formées par deux lèvres internes s'étendant chacune d'une des parois de connexion,
   lesdits premier et deuxième profilés étant concentriques et agencés pour coopérer par coulissement.

Un tel montant, mais ne comprenant pas de balai, est connu de l'état de la technique, notamment des tringles télescopiques placées entre deux parois latérales, par exemple pour la mise en place de rideaux. Un tel montant télescopique repose sur deux profilés concentriques qu'il convient de faire coulisser l'un par rapport à l'autre pour étendre et augmenter la longueur de la tringle. Malheureusement, le coulissement de tels profilés l'un dans l'autre est très souvent entravé par des blocages. En effet, si les deux profilés ne sont pas parfaitement maintenus dans un même axe lors de leur coulissement, c'est-à-dire dès que l'un des deux profilés présente une légère inclinaison par rapport à l'autre, des forces de friction et de frottement apparaissent et rendent particulièrement difficile une extension du montant télescopique. Ces problèmes de frottement et de blocage sont par ailleurs accentués par la présence inévitable et indispensable de jeu entre les deux profilés. Il faut en effet, pour pouvoir faire coulisser les deux profilés, qu'un léger écartement de l'ordre du millimètre soit prévu entre eux. Cependant, si petit soit cet écartement, il favorise malgré tout un désaxage entre les deux profilés, ce qui induit des forces de frottement voire un blocage du montant télescopique.

Un autre montant télescopique, comprenant cette fois un balai sur un profilé interne, est connu du document FR2961549. Ce document décrit un montant télescopique destiné à être placé dans une huisserie et qui comprend deux profilés concentriques coopérant par coulissement. Plus particulièrement, un premier profilé externe est agencé pour accueillir un deuxième profilé interne, lequel comporte sur la face externe d'une de ses parois un balai prévu pour éviter le passage de poussière via l'interstice entre le profilé interne et un bord de la huisserie. Ce document reprend donc un dispositif télescopique similaire à celui décrit ci-dessus à la différence qu'un balai est présent. C'est pourquoi, les mêmes problèmes de blocage liés à la présence de forces de frottement et de friction sont également rencontrés avec un tel montant. Par ailleurs, la présence d'un balai accentue même les forces de frottement puisqu'il constitue une épaisseur responsable d'un jeu plus important entre les deux profilés. En outre, cette épaisseur supplémentaire augmente les forces de pression exercée par le deuxième profilé interne sur le premier profilé externe, ce qui accentue plus encore les forces de frottement et de friction responsables de blocages fréquents. La présence d'une telle épaisseur constituée par le balai peut en outre conduire à une déformation du premier profilé externe à cause des forces de pression essentiellement exercées par le balai présentant une petite surface qui prend appui contre ledit premier profilé externe. Or, puisque la force de pression est définie par la formule P = F/S et puisque la surface du balai est relativement petite par rapport à la surface du premier profilé, la force de pression appliquée sur ce dernier est d'autant plus importante.

L'invention a pour but de pallier les inconvénients de l'état de la technique en procurant un montant télescopique ne souffrant pas de problèmes de blocage, étant peu sujet à des forces de frottement et de friction et n'étant pas sujet à des problèmes de déformation des profilés.

Pour résoudre ces problèmes, il est prévu suivant l'invention, un montant télescopique tel qu'indiqué au début caractérisé en ce que ledit premier profilé externe comprend sur ladite face interne d'une paroi faisant face à une desdites parois de connexion dudit profilé interne une gouttière formée dans une épaisseur de paroi et agencée pour recevoir ledit balai situé sur ledit deuxième profilé interne lorsque lesdits premier et deuxième profilés sont agencés pour coopérer par coulissement.

La présence d'une telle gouttière est particulièrement avantageuse puisqu'elle permet au balai de s'y loger au moins partiellement de telle sorte qu'il ne constitue plus une épaisseur responsable d'un jeu considérable entre les deux profilés. Par ailleurs, cette gouttière forme un élément de guidage lors du coulissement du deuxième profilé interne dans le premier profilé externe, ce qui contribue également à minimiser le jeu entre les profilés mais aussi à maintenir ces derniers dans un même axe afin d'éviter toute apparition additionnelle de forces de frottement et/ou de force de friction responsables de blocage comme décrit plus haut.

En outre, puisque le balai se loge au moins partiellement dans cette gouttière, le deuxième profilé peut prendre appui contre ledit premier profilé selon un contact étroit, le long de deux parties latérales de la face interne du premier profilé, ces deux parties latérales étant situées de part et d'autre de la gouttière. Un tel contact étroit entre les deux profilés, de part et d'autre de la gouttière constituant un élément de guidage, permet de maintenir en permanence, c'est-à-dire même lors du coulissement des profilés l'un par rapport à l'autre, un axe commun pour les deux profilés qui ne se positionnent dès lors plus de travers l'un par rapport à l'autre et qui, par conséquent ne se bloquent plus.

Avantageusement, ledit premier profilé externe du montant télescopique selon l'invention comprend en outre une troisième gorge en forme de U comprenant deux épaulements formés dans des parois latérales de ladite troisième gorge vers l'ouverture de ladite troisième gorge et formant deux rails longitudinaux dont les ouvertures communiquent avec une autre partie de lumière dudit premier profilé externe, ladite troisième gorge étant située sur une paroi de connexion opposée à celle comprenant ladite gouttière et étant agencée pour recevoir un moyen de blocage.

Avantageusement, ledit moyen de blocage est un système vis-écrou.

Préférentiellement, suivant l'invention, ledit deuxième profilé interne comprend deux lèvres agencées pour prendre respectivement appui dans lesdits rails longitudinaux formés par lesdits épaulements de ladite troisième gorge en forme de U présente sur ledit premier profilé externe, lorsque lesdits premier et deuxième profilés sont agencés pour coopérer par coulissement.

La gorge en forme de U présente donc deux épaulements qui forment deux rails longitudinaux, et qui permettent à deux lèvres du deuxième profilé d'y prendre appui en s'insérant dans lesdits rails formés par ces épaulements. Outre le fait qu'un tel positionnement permette d'orienter les deux profilés correctement l'un par rapport à l'autre, il permet également, à l'aide d'un moyen de blocage vis-écrou, de bloquer le montant télescopique en une position donnée. En effet, le système vis-écrou permet, par serrage, de comprimer les lèvres du deuxième profilé dans les rails longitudinaux formés par les épaulements de telle sorte que les deux profilés sont momentanément solidarisés l'un à l'autre dans une position prédéterminée. Plus particulièrement, un écrou est inséré dans la troisième gorge en forme de U et une vis est engagée dans cet écrou. Lors du serrage de cette vis, l'écrou est amené en butée contre les épaulements formant les deux rails longitudinaux de telle sorte qu'une pression est exercée sur les lèvres du deuxième profilé qui sont situées dans les rails longitudinaux formés par les épaulements.

Avantageusement, selon l'invention, ledit premier profilé externe comprend un bourrelet et ledit deuxième profilé interne comprend au moins une cavité longitudinale d'emboitement agencée pour recevoir ledit bourrelet ou inversement, lorsque lesdits premier et deuxième profilés sont placés par coulissement de manière concentrique. Que le bourrelet soit situé sur le premier profilé ou sur le deuxième profilé et qu'en conséquence une cavité longitudinale d'emboitement soit prévue pour recevoir ce bourrelet sur le deuxième ou sur le premier profilé permet de disposer d'un guide supplémentaire permettant de positionner et de mettre en mouvement longitudinal de manière optimale le deuxième profilé interne dans le premier profilé externe. Par ailleurs, la présence de ce bourrelet sur la longueur d'un profilé permet, par mise en place dans une cavité longitudinale d'emboitement telle que prévue par l'invention sur l'autre profilé, de rigidifier le montant télescopique, ce qui permet d'éviter des déformations de ce dernier, par exemple lors du coulissement des profilés.

De préférence, suivant la présente invention, ledit balai comporte une portion dorsale d'assemblage et est monté de façon amovible par positionnement de la portion dorsale dans un évidement pratiqué dans une épaisseur de paroi sur une face interne d'une des parois dudit deuxième profilé interne. Ceci est particulièrement avantageux puisque le balai constitue l'élément s'usant le plus rapidement par rapport aux autres éléments du montant télescopique. Suivant l'invention, le balai peut donc être aisément retiré et remplacé, ce qui permet de réutiliser les profilés de nombreuses fois.

Avantageusement, ledit premier et/ou ledit deuxième profilé comprend une pluralité de parois de renfort reliant une première paire de leurs parois latérales.

De façon tout aussi avantageuse, suivant l'invention, ledit premier et/ou ledit deuxième profilé comprend une pluralité de parois renfort reliant une deuxième paire de leurs parois latérales. Afin de renforcer les profilés et pour que ces derniers présentent une résistance adéquate, il est en effet prévu, suivant l'invention, que des parois de renfort relient par paire les parois latérales de chacun des profilés pour leur conférer une rigidité optimale.

De préférence, suivant l'invention ladite deuxième gorge dudit deuxième profilé interne et ladite première gorge dudit premier profilé externe forment, lorsque lesdits premier et deuxième profilés sont agencés pour coopérer par coulissement, une gorge de superposition au moins partielle de deux profilés comprenant un orifice longitudinal formé par l'alignement au moins partiel dudit orifice longitudinal présent sur la paroi frontale dudit premier profilé et dudit orifice longitudinal présent sur la paroi frontale dudit deuxième profilé, ladite gorge de superposition au moins partielle de deux profilés étant agencée pour recevoir et maintenir au moins partiellement une partie sensiblement périphérique d'un élément d'obturation, par exemple un bord d'une bâche, à l'aide d'un joint.

Par le terme « coopérer par coulissement », on entend, au sens de la présente invention, le recouvrement d'un élément au moins partiellement par un autre ou par insertion au moins partielle d'un élément concentriquement par un autre. En l'occurrence, dans le cas présent, la deuxième gorge sensiblement en forme de U du profilé interne coulisse au moins partiellement dans la première gorge sensiblement en forme de U du profilé externe et est donc recouverte au moins partiellement par cette dernière.

Suivant l'invention, il est bien entendu que chacune des gorges sensiblement en forme de U de chacun des premier et deuxième profilés est également agencée pour recevoir et maintenir au moins partiellement une partie sensiblement périphérique d'un élément d'obturation, par exemple un bord d'une bâche à l'aide d'un joint, un emboitement des première et deuxième gorges n'étant pas indispensable pour qu'une retenue d'un élément d'obturation ait lieu.

Chaque gorge (première, deuxième ou gorge de superposition au moins partielle de deux profilés) permet d'y introduire au moins partiellement une partie sensiblement périphérique d'un élément d'obturation, comme par exemple le bord ou la lisière d'une bâche en plastique, qu'il est possible de bloquer et de maintenir dans cette gorge par exemple par l'intermédiaire d'un joint qui est ainsi logé dans la gorge. Ce dernier peut être retenu dans ladite gorge, par exemple par deux lèvres internes situées à la partie supérieure de ladite gorge.

D'autres formes de réalisation du montant télescopique suivant l'invention sont indiquées dans les revendications annexées.

La présente invention porte également sur un système télescopique comprenant au moins quatre montants télescopiques formant un cadre agencé pour être positionné dans une ouverture, du type ouverture de porte ou de fenêtre délimitée par une huisserie ou de type délimitée par des murs adjacents, ledit système télescopique étant en outre agencé pour accueillir un élément d'obturation, par exemple une bâche, et comprenant en outre au moins quatre pièces de jonction, en particulier quatre pièces de coin, dans lesquelles deux montants adjacents perpendiculaires sont emboités.

Le système télescopique forme alors un système d'obturation de l'ouverture.

Avantageusement, lesdits deux montants adjacents perpendiculaires emboités dans une pièce de jonction, en particulier dans une pièce de coin, sont en outre reliés par un moyen de compensation, par exemple par un ressort plat.

Par le terme « emboité », on entend, au sens de l'invention, qu'un élément est recouvert et retenu au moins partiellement par un autre ou par insertion au moins partielle d'un élément concentriquement par rapport à un autre. En l'occurrence, par exemple, chaque montant est sensiblement emboité dans une partie de la pièce de jonction de sorte que les montants soient non parallèles, en particulier sensiblement perpendiculaires.

Avantageusement, ledit système d'obturation d'une ouverture, du type ouverture de porte ou de fenêtre délimitée par une huisserie ou de type délimité par des murs adjacents, comprend :
- un élément d'obturation, par exemple une bâche, agencé pour couvrir ladite ouverture,
- un cadre, composé d'au moins quatre profilés formant chacun un montant dudit cadre, chaque profilé comprenant une paroi frontale, une paroi dorsale et deux parois de connexion et présentant une partie de lumière formant une cavité d'une gorge sensiblement en forme de U, ledit cadre étant prévu pour être positionné à l'intérieur de ladite ouverture et présentant un premier moyen de fixation, et
- un deuxième moyen de fixation,
lesdits premier et deuxième moyens de fixation étant prévus pour coopérer ensemble de façon à assurer le maintien dudit élément d'obturation sur ledit cadre et pour être dissociables de façon à permettre le retrait dudit élément d'obturation sur le cadre, ledit premier moyen de fixation étant une ouverture définie par un orifice longitudinal présent sur ladite paroi frontale de chaque profilé formant une ouverture de ladite gorge, les parties adjacentes de ladite ouverture étant formées par deux lèvres internes s'étendant chacune d'une des parois de connexion, ladite gorge dudit profilé étant destinée à loger une partie sensiblement périphérique de l'élément d'obturation traversant ladite ouverture, ledit deuxième moyen de fixation étant formé d'au moins un joint périphérique agencé pour être tenu de manière ajustée par chaque lèvre interne de ladite ouverture de ladite gorge dans laquelle ladite partie sensiblement périphérique dudit moyen d'obturation est logée et fixée.

Le système d'obturation comprend au moins un moyen de retenue dudit moyen d'obturation présentant un premier profil prédéterminé complémentaire à un deuxième profil prédéterminé de ladite gorge, ledit au moins un moyen de retenue étant agencé pour être logé, au moins partiellement, dans ladite gorge dudit profilé, entre ladite partie sensiblement périphérique de l'élément d'obturation et ledit joint, en superposition au-dessus de ladite partie sensiblement périphérique dudit élément d'obturation de façon à en assurer une retenue sur ledit cadre et de façon à accueillir ledit au moins un joint périphérique présentant un troisième profil prédéterminé agencé pour coopérer avec ledit premier profil prédéterminé dudit moyen de retenue.

De cette façon, lorsque le système d'obturation est en cours de positionnement et que le cadre est placé dans une ouverture, il y a lieu de positionner l'élément d'obturation. Selon un mode de réalisation, ceci signifie que le placeur doit maintenir l'élément d'obturation, l'aligner le long d'un profilé formant un montant basal du cadre et insérer la partie basale dudit élément d'obturation dans la lumière du profilé basal et sensiblement périphérique formant une gorge. Ensuite, il place dans cette gorge les moyens de retenue qui vont maintenir au moins une partie sensiblement périphérique de l'élément d'obturation dans la gorge le temps d'y placer le joint périphérique. Ensuite, le placeur redresse l'élément d'obturation en position verticale et positionne ensuite par exemple une série de moyens de retenue dans les profilés formant les montants latéraux-verticaux du cadre par-dessus l'élément d'obturation redressé en position d'obturation pour couvrir l'ouverture. Enfin, il place les moyens de retenue par-dessus au moins une partie supérieure périphérique de l'élément d'obturation, sans aucune difficulté dès lors que la partie inférieure de ce dernier est solidement arrimée dans ladite gorge tout comme au moins une partie périphérique latérale. Il peut alors prendre le temps de positionner confortablement et aisément les joints longitudinaux dans les gorges latérales et supérieures et ainsi assurer l'herméticité totale du système. Bien entendu, les moyens de retenues peuvent présenter une longueur bien inférieure à la largeur de l'ouverture. Dans ce cas, le placeur peut positionner plusieurs moyens de retenue à intervalle régulier. Par contre, si l'élément de retenue présente une grande longueur, le placeur peut en positionner bien moins.

Selon un autre mode de réalisation, le placement de l'élément d'obturation sur le cadre peut être réalisé en l'alignant sur le profilé formant le montant supérieur du cadre et en plaçant au moins une partie sensiblement périphérique supérieure de l'élément d'obturation dans la cavité de la gorge définie par une partie de lumière du profilé formant le montant supérieur. Ensuite, il convient de placer des moyens de retenue qui vont maintenir la partie sensiblement périphérique de l'élément d'obturation dans la lumière d'un profilé formant une gorge, ledit profilé formant un montant supérieur dudit cadre le temps d'y placer un joint périphérique. Ensuite, le placeur peut laisser l'élément d'obturation se déployer de haut en bas sous l'action de son poids sans voir sa partie sensiblement périphérique supérieure se décrocher. L'élément d'obturation est en effet relié solidairement au montant supérieur du cadre de par la présence du moyen de retenue retenant la partie supérieure sensiblement périphérique de l'élément d'obturation dans la gorge du profilé formant le montant supérieur. Le placeur positionnera ensuite une série de moyens de retenue dans les profilés formant les montants latéraux-verticaux du cadre par-dessus l'élément d'obturation redressé en position d'obturation pour couvrir l'ouverture. Enfin, il placera les moyens de retenue par-dessus au moins une partie basale sensiblement périphérique de l'élément d'obturation, sans aucune difficulté dès lors que la partie supérieure et les parties périphériques latérales de l'élément d'obturation sont solidement arrimées dans la gorge. L'opérateur peut alors prendre le temps de positionner confortablement et aisément les joints longitudinaux dans les gorges latérales et basales et ainsi assurer l'herméticité totale du système.

En outre, la présence de moyens de retenue positionnés entre l'élément d'obturation et le joint, mais le tout, logé dans la gorge permet de réduire drastiquement l'impact des coefficients de friction des joints et de l'élément d'obturation qui peuvent alors prendre n'importe quelle valeur, laissant libre choix de la nature de matières formant ledit joint périphérique et l'élément d'obturation.

De manière similaire, que les matières soit plutôt élastiques ou rigides, l'impact sur l'assemblage sera également fortement réduit.

En outre, ledit élément d'obturation est éventuellement muni d'une fermeture à glissière. La présence de cette glissière permet alors de faciliter le passage vers un chantier en autorisant une ouverture temporaire du système d'obturation sans pour autant devoir systématiquement le démonter et le remonter du cadre.

De préférence, ledit au moins un joint périphérique est réalisé en un matériau souple.

Avantageusement, ledit au moins un joint périphérique comporte une pluralité de joints longitudinaux.

De préférence, ledit au moins un moyen de retenue est réalisé en un matériau rigide.

Avantageusement, ledit au moins un moyen de retenue comporte une pluralité de moyens de retenue.

De préférence, au moins un desdits montants du cadre comprend un premier profilé externe et un deuxième profilé interne agencés pour coopérer par coulissement pour former un montant télescopique comprenant :
- un premier profilé externe comprenant une paroi frontale, une paroi dorsale et deux parois de connexion, chacune des parois présentant une face interne et une face externe, ledit premier profilé présentant une partie de lumière formant une cavité d'une première gorge sensiblement en forme de U, ladite paroi frontale comportant un orifice longitudinal formant une ouverture de ladite première gorge dont les parties adjacentes sont formées par deux lèvres internes s'étendant chacune d'une des parois de connexion, et
- un deuxième profilé interne comprenant une paroi frontale, une paroi dorsale et deux parois de connexion, chacune des parois présentant une face interne et une face externe, ladite face externe d'une desdites parois de connexion dudit deuxième profilé étant munie d'un balai au moins partiellement sur sa longueur, ledit deuxième profilé présentant une partie de lumière formant une cavité d'une deuxième gorge sensiblement en forme de U, ladite paroi frontale comportant un orifice longitudinal formant une ouverture de ladite deuxième gorge dont les parties adjacentes sont formées par deux lèvres internes
   s'étendant chacune d'une des parois de connexion, ladite deuxième gorge dudit deuxième profilé interne et ladite première gorge dudit premier profilé externe formant, lorsque lesdits premier et deuxième profilés sont agencés pour coopérer par coulissement, une gorge de superposition au moins partielle de deux profilés comprenant un orifice longitudinal formé par l'alignement au moins partiel dudit orifice longitudinal présent sur la paroi frontale dudit premier profilé et dudit orifice longitudinal présent sur la paroi frontale dudit deuxième profilé, ladite gorge de superposition au moins partielle de deux profilés étant agencée pour recevoir et maintenir au moins partiellement une partie sensiblement périphérique dudit élément d'obturation.

Par le terme « coopérer par coulissement », on entend, le recouvrement d'un élément au moins partiellement par un autre ou par insertion au moins partielle d'un élément concentriquement par rapport à un autre. En l'occurrence, dans le cas présent, la deuxième gorge sensiblement en forme de U du profilé interne coulisse au moins partiellement dans la première gorge sensiblement en forme de U du profilé externe et est donc recouverte au moins partiellement par cette dernière. Dans ce contexte, le coulissement du profilé interne dans le profilé externe de chaque montant télescopique fait coïncider les deux gorges susdites de telle sorte à former une seule gorge sensiblement en forme de U. De cette façon par la présence de montants télescopiques, le cadre est adaptable à un large éventail de dimensions de ladite ouverture à obstruer, ce qui ne remet en aucun cas en cause l'herméticité de l'obturation de l'ouverture grâce au couple joint périphérique-élément d'obturation et à la présence avantageuse de moyens de retenue.

Dans une forme de réalisation particulière, deux montants adjacents du cadre sont emboités dans une pièce de jonction, de préférence pleine, de telle façon que les montants soient non parallèles, en particulier sensiblement perpendiculaires.

De préférence, ladite pièce de jonction comprend une première extrémité munie d'un moyen de couplage mutuel avec une extrémité dudit profilé externe d'un premier montant télescopique et une deuxième extrémité munie d'un moyen de couplage mutuel avec une extrémité dudit profilé interne d'un deuxième montant télescopique adjacent, ladite pièce de jonction présentant sur ladite première extrémité une gorge agencée pour coopérer avec ladite gorge dudit profilé externe dudit premier montant et présentant sur ladite deuxième extrémité une gorge agencée pour coopérer avec ladite gorge dudit profilé interne dudit deuxième montant.

La présence de la pièce de jonction permet d'orienter le placement des montants du cadre contre chaque côté de l'ouverture, telle que décrite précédemment et en particulier dans le cadre d'une ouverture définie par une huisserie. La pièce de jonction permet aux montants du cadre d'épouser parfaitement le profil de l'ouverture puisque chaque pièce de jonction est agencée, lors du placement du cadre, à venir en butée contres les coins de ladite ouverture, ce qui permet de renforcer l'étanchéité du système d'obturation.

Alternativement, ladite pièce de jonction présente une gorge sur une face frontale agencée pour relier ladite gorge de ladite première extrémité et ladite gorge de ladite deuxième extrémité de la pièce de jonction et ainsi former une seule gorge continue.

De cette façon, la partie sensiblement périphérique de l'élément d'obturation peut être fixée à la pièce de jonction de sorte que l'herméticité du couple joint-élément d'obturation est garantie tant au niveau de la pièce de jonction qu'au niveau de chaque montant formant le cadre.

Dans une forme de réalisation particulièrement avantageuse du système d'obturation, au moins un moyen de retenue présente une paroi de fond et deux parois latérales se faisant face, lesdites parois latérales s'étendant à partir de ladite paroi de fond et présentant, d'une part, une face externe destinée à faire face à une face interne de ladite gorge sensiblement en forme de U d'un profilé formant un montant dudit cadre.

Selon une autre forme de réalisation, la face externe de chaque paroi latérale dudit au moins un moyen de retenue est destinée à faire face à une face interne d'une gorge formée lorsque lesdits premier et deuxième profilés d'un montant télescopique sont agencés pour coopérer par coulissement, chacun des profilés présentant une partie de lumière formant une cavité d'une gorge sensiblement en forme de U,

Dans une forme de réalisation chaque face externe dudit élément de retenue présente au moins une protubérance agencée pour forcer l'emboîtement de ladite pièce de retenue dans ladite cavité de ladite gorge formée dans une lumière d'un profilé formant un montant dudit cadre ou formée lorsque lesdits premier et deuxième profilés d'un montant télescopique sont agencés pour coopérer par coulissement et forment une gorge définie par le coulissement de ladite deuxième gorge dans laite première gorge.

La présence d'au moins une protubérance, orientée vers une face interne de ladite gorge, sur les parois latérales du moyen de retenue permet d'accentuer localement la force de cohésion et de pression générée sur les parois de ladite gorge. En effet, la ou les protubérances exercent une pression localisée sur l'élément d'obturation et la face interne de la gorge lorsqu'une partie sensiblement périphérique dudit élément d'obturation est placée dans ladite gorge.

Eventuellement, pour chaque paroi latérale dudit moyen de retenue, chaque face interne présente au moins une protubérance orientée dans une direction opposée à la protubérance de la face externe. Par ailleurs ledit joint présente en outre une saillie longitudinale d'une première épaisseur prédéterminée e1 et terminée par un premier et un deuxième épaulements, d'une hauteur prédéterminée h1, pour former un ensemble d'une deuxième épaisseur e2 prédéterminée, lesdites parois latérales du moyen de retenue étant séparées l'une de l'autre d'une distance prédéterminée d1, de sorte que d1 ≤ e2, chaque épaulement du joint étant agencé pour être placé entre la paroi de fond du moyen de retenue et chaque saillie présentent sur les faces internes des parois latérales du moyen de retenue.

Avantageusement, la saillie de chaque face interne du moyen de retenue présente une troisième épaisseur prédéterminée e3 et est placée à une deuxième distance prédéterminée d2 à partir de la paroi de fond du moyen de retenue, de telle sorte que e3 ≥ e2 - e1 et/ou que de h1 ≥ d2.

De cette façon, le joint, une fois logé de manière ajustée dans le moyen de retenue, de par la présence des saillies sur les faces internes du moyen de retenue, est lié de manière solidaire à ce dernier. De cette façon, lors du remplacement de l'élément d'obturation, le retrait du joint hors d'une gorge formée d'un profilé formant un montant du cadre ou hors d'une gorge formée par le coulissement d'une gorge du deuxième profilé interne dans une gorge du premier profilé externe d'un montant télescopique, est effectué conjointement avec le retrait dudit moyen de retenue. Ceci permet d'effectuer un retrait plus rapide de l'élément d'obturation de son emplacement, par exemple, lorsque de dernier est endommagé. Il suffit ensuite alors à l'homme du métier de séparer le moyen de retenue et joint, de placer un nouvel élément d'obturation, un moyen de retenue, et un joint pour former aisément et à nouveau un autre système d'obturation.

De préférence, la pièce de jonction est prévue pour être positionnée à l'intérieur d'une ouverture, du type ouverture de porte ou de fenêtre délimitée par une huisserie ou de type délimitée par des murs adjacents et pour coopérer avec une paire de montants télescopiques adjacents, d'un cadre agencé pour accueillir un élément d'obturation, par exemple une bâche. Chaque montant télescopique comprend un premier profilé externe présentant une partie de lumière formant une première gorge sensiblement en forme de U, et un deuxième profilé interne présentant une partie de lumière formant une deuxième gorge sensiblement en forme de U, ladite deuxième gorge dudit deuxième profilé interne et ladite première gorge dudit premier profilé externe formant, lorsque lesdits premier et deuxième profilés sont agencés pour coopérer par coulissement, une gorge de superposition au moins partielle, comprenant un orifice longitudinal formé par l'alignement au moins partiel d'un orifice longitudinal présent sur une paroi frontale dudit premier profilé et d'un orifice longitudinal présent sur une paroi frontale dudit deuxième profilé. Ladite gorge de superposition au moins partielle est en outre agencée pour recevoir et maintenir au moins partiellement une partie sensiblement périphérique d'un élément d'obturation, par exemple un bord d'une bâche. Ladite première extrémité de la pièce de jonction est agencée pour être emboitée à une extrémité dudit premier profilé externe d'un premier montant télescopique, ladite deuxième extrémité de ladite pièce de jonction étant agencée pour être emboitée à une extrémité dudit deuxième profilé interne d'un deuxième montant télescopique adjacent audit premier montant télescopique. Une partie sensiblement périphérique dudit élément d'obturation est destinée à être logée dans la lumière formant une cavité de la gorge du premier ou du deuxième profilé, ou dans ladite gorge de superposition au moins partielle de deux profilés, chaque gorge étant agencée pour accueillir, au moins partiellement, de manière ajustée un joint pour fixer ladite partie sensiblement périphérique dudit élément d'obturation dans ladite gorge.

Par le terme « emboitée », on entend qu'un élément est recouvert et retenu au moins partiellement par un autre ou par insertion au moins partielle d'un élément dans un autre, par exemple de manière concentrique. En l'occurrence, par exemple, une extrémité de chaque montant télescopique est emboitée au moins dans une partie de chaque extrémité de la pièce de jonction.

Ladite première extrémité de ladite pièce de jonction présente une première gorge longitudinale agencée pour être logée, au moins partiellement, dans la lumière formant une cavité de ladite gorge dudit profilé externe du premier montant, et en ce que ladite deuxième extrémité de ladite pièce de jonction présente une deuxième gorge longitudinale destinée à être logée au moins partiellement dans la lumière formant une cavité de ladite gorge dudit profilé interne du deuxième montant adjacent, chacune des gorges étant agencée pour accueillir, au moins partiellement, ledit joint, par-dessus une partie dudit élément d'obturation superposé à ladite pièce de jonction.

De cette façon, la première gorge de la première extrémité de la pièce de jonction logée dans la lumière formant une cavité de la gorge du profilé externe et la deuxième gorge présente sur la deuxième extrémité de la pièce de jonction logée dans la lumière formant une cavité de la gorge du profilé interne forment une continuité du moyen de fixation de l'élément d'obturation présent sur chaque profilé.

Lorsque le joint est placé dans la gorge du profilé externe d'un premier montant, adjacent à la pièce de jonction, il permet la fixation d'une partie sensiblement périphérique de l'élément d'obturation dans la gorge du profilé externe. Le même joint est également logé au moins partiellement dans la lumière formant une cavité de la première gorge de la première extrémité de la pièce de jonction, par dessus la partie sensiblement périphérique de l'élément d'obturation qui recouvre la pièce de jonction. De préférence, le joint se prolonge au moins jusqu'à entrer en contact avec au moins une des parois latérales de l'ouverture à obturer. En outre, le joint du deuxième montant adjacent est placé au moins partiellement dans la gorge du profilé interne du deuxième montant, par dessus l'élément d'obturation et fixe ainsi une partie sensiblement périphérique de l'élément d'obturation, à savoir, la partie périphérique perpendiculaire à la partie périphérique logée dans le premier montant.

Le même joint est également logé au moins partiellement dans la lumière formant une cavité de la deuxième gorge présente sur la deuxième extrémité de la pièce de jonction, par dessus ladite partie sensiblement périphérique l'élément d'obturation qui recouvre la pièce de jonction.

Par ailleurs, la pièce de jonction est de préférence une pièce de coin et présente avantageusement une forme sensiblement en L de sorte que ledit premier montant soit orienté de façon sensiblement perpendiculaire audit deuxième montant.

La pièce de jonction est en outre caractérisée en ce qu'elle présente une bavette sur une face frontale, ladite bavette étant agencée pour recouvrir, au moins partiellement, une face frontale dudit premier profilé externe d'un premier montant télescopique et une face frontale dudit deuxième profilé interne d'un deuxième montant télescopique.

La présence de la bavette permet d'obstruer d'éventuels interstices créés entre les parois de l'ouverture et la pièce de jonction du cadre, assurant ainsi l'imperméabilité du système dans les coins de l'ouverture à obstruer.

Eventuellement, la pièce de jonction comprend, entre ladite première extrémité et ladite deuxième extrémité, une partie pleine agencée pour recevoir d'un coté, en butée, ledit profilé externe du premier montant et de l'autre côté, en butée, ledit profilé interne dudit deuxième montant.

La poussière ne sait dès lors pas pénétrer dans le profilé via la pièce de coin puisque d'une part, le passage est bloqué au niveau de la jonction joint-élément d'obturation, et, d'autre part, puisque la partie de la pièce de jonction dans laquelle le joint n'est pas logé est pleine.

Dans une forme de réalisation particulière, ladite partie pleine de ladite pièce de jonction est réalisée en un matériau souple, de type caoutchouteux.

De cette façon, il y a obturation de la partie creuse du profilé et prévention du passage de la poussière au-delà du couple joint-élément d'obturation.

Dans une variante, ladite pièce de jonction comprend une troisième extrémité et présente une forme sensiblement en T, ladite première extrémité étant agencée pour être emboitée à une extrémité dudit premier profilé externe d'un premier montant télescopique, ladite deuxième extrémité de ladite pièce de jonction étant agencée pour être emboitée à une extrémité dudit deuxième profilé interne d'un deuxième montant télescopique adjacent audit premier montant télescopique, ledit premier montant étant sensiblement aligné audit deuxième montant, ladite troisième extrémité étant agencée pour être emboitée à une extrémité dudit premier profilé externe ou dudit deuxième profilé interne d'un troisième montant ledit troisième montant étant sensiblement perpendiculaire auxdits premier et deuxième montants.

De préférence, ladite pièce de jonction en T comprend, entre chaque extrémité, une partie pleine agencée pour recevoir d'un premier coté, en butée, ledit profilé externe du premier montant, d'un deuxième côté, en butée, ledit profilé interne dudit deuxième montant, et d'un troisième côté, en butée, ledit profilé interne ou externe dudit troisième montant.

Dans une forme de réalisation particulière, ladite partie pleine de ladite pièce de jonction est réalisée en un matériau souple, de type caoutchouteux.

De préférence, ladite troisième extrémité présente une troisième gorge longitudinale agencée pour être logée, au moins partiellement, dans la lumière formant une cavité de ladite gorge dudit profilé externe ou dans ladite gorge du profilé interne dudit troisième montant.

La présence d'une pièce de jonction en T est particulièrement recommandée lorsque l'ouverture à obstruer présente de grandes dimensions, c'est-à-dire d'au moins 150 cm (ou un multiple d'au moins 150 cm) en largeur et d'au moins 150 cm (ou un multiple d'au moins 150 cm) en hauteur.

Cette ouverture présentant de grandes dimension, il est difficile pour l'homme du métier de mettre seul en place le système d'obturation afin d'obturer avec un seul élément d'obturation cette ouverture. Dès lors, la présence d'une pièce de jonction en T permet de placer au moins un troisième montant, divisant l'ouverture définie par le cadre en deux ouvertures de plus petites tailles qui peuvent facilement être couverte chacune par un élément d'obturation.

Il est à noter que pour les ouvertures présentant une grande hauteur, c'est-à-dire au moins égale à 150 cm (ou à un multiple d'au moins 150 cm), plusieurs montants télescopiques peuvent être reliés deux à deux par une pièce de jonction présentant une première extrémité faisant face à une deuxième extrémité, de sorte que deux montants adjacents relié à la même pièce de jonction soit alignés entre eux.

Un procédé d'obturation d'une ouverture, du type ouverture de porte ou de fenêtre délimitée par une huisserie ou de type délimitée par des murs adjacents, comprend les étapes suivantes :
- une jonction d'au moins quatre montants deux à deux par une pièce de jonction pour former un cadre, chaque profilé formant un montant dudit cadre, ladite pièce de jonction présentant une première extrémité agencée pour être reliée à un premier montant, et une deuxième extrémité agencée pour être reliée à un deuxième montant, adjacent audit premier montant,
- un placement du cadre à l'intérieur de l'ouverture de telle sorte qu'il prenne appui contre chaque côté de ladite ouverture,
- une insertion d'au moins une partie sensiblement périphérique d'un élément d'obturation dans une gorge présente dans chaque profilé ou dans une gorge formée par le coulissement d'une deuxième gorge d'un deuxième profilé interne dans une première gorge d'un premier profilé externe d'un montant télescopique, lorsque lesdits premier et deuxième profilés sont agencés pour coopérer par coulissement, et
- un positionnement ajusté d'au moins un joint dans ladite gorge présente sur chaque profilé pour y fixer ladite au moins une partie sensiblement périphérique de l'élément d'obturation, de sorte à former un système d'obturation de ladite ouverture,
   caractérisé en ce qu'il comprend une étape préalable à celle de positionnement dudit au moins un joint, dans laquelle un moyen de retenue, présentant un premier profil prédéterminé complémentaire à un deuxième profil formé par ladite gorge et des lèvres internes définissant son ouverture, est placé dans ladite gorge entre ladite partie sensiblement périphérique d'un élément d'obturation et ledit joint, en superposition au-dessus de ladite au moins une partie sensiblement périphérique d'un élément d'obturation de façon à en assurer une retenue sur ledit cadre et de façon à accueillir ledit joint présentant un troisième profil prédéterminé agencé pour coopérer avec ledit premier profil prédéterminé dudit moyen de retenue.

Avantageusement, le procédé d'obturation comprend, préalablement à ladite étape de jonction d'au moins quatre profilés deux à deux pour former le cadre, une étape de déploiement télescopique de deux profilés agencés pour coopérer par coulissement et formant un montant dudit cadre de manière à ce qu'au moins une pièce de jonction vienne en butée contre un des coins de l'ouverture. Par exemple, chaque montant est un montant télescopique comprenant un premier profilé externe et un deuxième profilé interne, lesdits premier et deuxième profilés étant agencés pour coopérer par coulissement.

Eventuellement, ladite étape de déploiement télescopique de chaque montant dudit cadre est suivie d'une étape de blocage dans laquelle ledit premier profilé externe est fixé momentanément dans une position prédéterminée par rapport à celle dudit deuxième profilé interne.

Eventuellement ladite étape de blocage est suivie d'une étape dans laquelle deux montants adjacents dudit cadre sont reliés entre eux par un moyen de compensation additionnel agencé pour exercer une poussée sur chaque montant de telle sorte qu'ils prennent appui contre les côtés de l'ouverture.

Préférentiellement, ladite étape de positionnement d'au moins un joint dans ladite gorge de chaque profilé s'effectue à la fois dans ladite gorge d'un profilé formant un montant dudit cadre et dans une gorge présente sur ladite première extrémité de ladite pièce de jonction, ladite gorge de ladite première extrémité de ladite pièce de jonction étant de préférence agencée pour accueillir un moyen de retenue. De cette façon au moins une partie sensiblement périphérique de l'élément d'obturation est reliée à ladite pièce de jonction.

Alternativement, ladite étape de positionnement d'au moins un joint dans ladite gorge de chaque profilé formant un montant du cadre s'effectue à la fois dans ladite gorge d'un profilé formant un montant dudit cadre et dans une gorge présente sur ladite deuxième extrémité de ladite pièce de jonction, ladite gorge de ladite deuxième extrémité de ladite pièce de jonction étant également agencée pour accueillir un moyen de retenue.

Eventuellement, le procédé d'obturation comprend en outre une étape d'insertion de manière ajustée d'un joint frontal dans une rainure frontale disposée sur une bavette frontale d'au moins une pièce de jonction, par-dessus une partie dudit élément d'obturation.

De manière alternative, le procédé d'obturation d'une ouverture, du type ouverture de porte ou de fenêtre délimitée par une huisserie ou de type délimitée par des murs adjacents, peut aussi comprendre les étapes suivantes :
- une jonction d'au moins quatre profilés deux à deux par une pièce de jonction pour former un cadre, chaque profilé formant un montant, ladite pièce de jonction présentant une première extrémité agencée pour être reliée à un premier montant, et une deuxième extrémité agencée pour être reliée à un deuxième montant, adjacent audit premier montant,
- un placement du cadre à l'intérieur de l'ouverture de telle sorte qui prenne appui contre chaque côté de ladite ouverture,
- une insertion d'au moins une partie sensiblement périphérique d'un élément d'obturation dans une gorge présente dans chaque profilé ou dans une gorge formée par le coulissement d'une deuxième gorge d'un deuxième profilé interne dans une première gorge d'un premier profilé externe d'un montant télescopique, lorsque lesdits premier et deuxième profilés sont agencés pour coopérer par coulissement, et
- un positionnement ajusté d'au moins un joint dans ladite gorge présente sur chaque profilé pour y fixer ladite au moins une partie sensiblement périphérique de l'élément d'obturation, de sorte à former un système d'obturation de ladite ouverture,
caractérisé en ce que ladite étape de positionnement d'au moins un joint dans ladite gorge de chaque profilé formant un montant s'effectue à la fois dans ladite gorge d'un montant dudit cadre et dans une gorge longitudinale présente sur ladite première extrémité de ladite pièce de jonction, ladite gorge de ladite première extrémité de ladite pièce de jonction étant de préférence agencée pour accueillir un moyen de retenue. De cette façon au moins une partie sensiblement périphérique de l'élément d'obturation est reliée à ladite pièce de jonction.

De préférence, ladite étape de positionnement d'au moins un joint dans ladite gorge de chaque profilé formant un montant s'effectue à la fois dans ladite gorge d'un profilé formant un montant dudit cadre et dans une gorge longitudinale présente sur ladite deuxième extrémité de ladite pièce de jonction, ladite gorge de ladite deuxième extrémité de ladite pièce de jonction étant également agencée pour accueillir un moyen de retenue.

Avantageusement, le procédé comprend une étape préalable à celle de positionnement dudit au moins un joint, dans laquelle un moyen de retenue, présentant un premier profil prédéterminé complémentaire deuxième profil formé par ladite gorge et des lèvres internes définissant son ouverture, est placé dans ladite gorge entre ladite partie sensiblement périphérique d'un élément d'obturation et ledit joint, en superposition au-dessus de ladite au moins une partie sensiblement périphérique d'un élément d'obturation de façon à en assurer une retenue sur ledit cadre et de façon à accueillir ledit joint présentant un troisième profil prédéterminé agencé pour coopérer avec ledit premier profil prédéterminé dudit moyen de retenue.

Alternativement, le procédé comprend, préalablement à ladite étape de jonction d'au moins quatre profilés deux à deux pour former le cadre, une étape de déploiement télescopique de deux profilés agencés pour coopérer par coulissement et formant un montant télescopique dudit cadre de manière à ce qu'au moins une pièce de jonction vienne en butée contre un des coins de l'ouverture, chaque montant étant un montant télescopique comprenant un premier profilé externe, et un deuxième profilé interne lesdits premier et deuxième profilés étant agencés pour coopérer par coulissement.

Eventuellement, ladite étape de déploiement télescopique de chaque montant dudit cadre est suivie d'une étape de blocage dans laquelle ledit premier profilé externe est fixé momentanément dans une position prédéterminée par rapport à celle dudit deuxième profilé interne.

Par ailleurs, ladite étape de blocage est préférentiellement suivie d'une étape dans laquelle deux montants adjacents dudit cadre sont reliés entre eux par un moyen de compensation additionnel agencé pour exercer une poussée sur chaque montant de telle sorte qu'ils prennent appui contre les côtés de l'ouverture.

Avantageusement, ladite étape de positionnement d'au moins un joint dans ladite gorge de chaque montant s'effectue à la fois dans ladite gorge d'un montant dudit cadre et dans une gorge longitudinale présente sur ladite première extrémité de ladite pièce de jonction, ladite gorge de ladite première extrémité de ladite pièce de jonction étant de préférence agencée pour accueillir un moyen de retenue. De cette façon au moins une partie sensiblement périphérique de l'élément d'obturation est reliée à ladite pièce de jonction.

Eventuellement, le procédé d'obturation comprend en outre une étape d'insertion de manière ajustée d'un joint frontal dans une rainure frontale disposée sur une bavette frontale d'au moins une pièce de jonction, par-dessus une partie dudit élément d'obturation.

A titre illustratif, le cadre peut être un ensemble comprenant quatre pièces de jonction en forme de L et quatre montants, chaque pièce de jonction reliant deux à deux chaque montant du cadre pour former un quadrilatère agencé pour accueillir un élément d'obturation.

Dans un mode de réalisation, le cadre peut être un ensemble de six montants et de six pièces de jonctions, dont quatre en forme de L, dans lequel deux côtés opposés du cadre sont formés chacun de deux montants reliés entre eux par une pièce de jonction linéaire, de sorte que les deux montants formant un même côté soient alignés entre eux pour former un cadre rectangulaire de plus grande dimension.

Dans un autre mode de réalisation, les montants de chaque paire de montants formant les côtés opposés du cadre sont reliés entre eux par une pièce de jonction en forme de T. Un septième montant additionnel est alors placé pour relié chaque extrémité libres des pièces de jonction en forme de T qui se font face de façon à diviser le cadre en deux cadres. L'obturation de l'ouverture est réalisée en plaçant deux éléments d'obturation, chacun sur un cadre constituant l'ensemble à sept montants.

D'autres caractéristiques, détails et avantages de l'invention ressortiront de la description donnée ci-après, à titre non limitatif et en faisant référence aux dessins annexés.
Les figures 1 a à 1 c sont des vues schématiques d'un premier montant télescopique, selon l'invention.
Les figures 2a à 2c sont des vues schématiques d'un autre montant télescopique, selon l'invention.
La figure 3 est une vue schématique en coupe du système d'obturation.
La figure 4 est une vue schématique en coupe d'un premier mode de réalisation du système d'obturation.
La figure 5 est une vue schématique en coupe d'un deuxième mode de réalisation du système d'obturation.
La figure 6a est une vue schématique en coupe d'un troisième mode de réalisation du système d'obturation.
La figure 6b est une vue schématique en coupe d'un quatrième mode de réalisation du système d'obturation.
La figure 7 est une vue en perspective de la pièce de jonction en forme de L selon un mode de réalisation préférentiel.
La figure 8 est une vue en perspective de la pièce de jonction en forme de L selon un autre mode de réalisation préférentiel.
La figure 9 est une vue éclatée d'un assemblage joint, pièce de jonction, et montants.
La figure 10 est une vue du dessus de la pièce de jonction en forme de L selon un mode de réalisation alternatif.

Sur les figures, les éléments identiques ou analogues portent les mêmes références.

Le système d'obturation d'une ouverture comprend un cadre formé par au moins quatre montants télescopiques, chaque montant présentant selon l'invention une paroi frontale 30, 30' une paroi dorsale 31, 31', opposée à la paroi frontale et deux parois de connexion 32, 32' et 33, 33' reliant les parois frontale et dorsale.

La paroi de connexion 32, 32' de chaque profilé étant agencé pour être mise en contact contre un côté d'une ouverture, de type ouverture de porte ou de fenêtre délimitée par une huisserie ou de type délimitée par des murs adjacents.

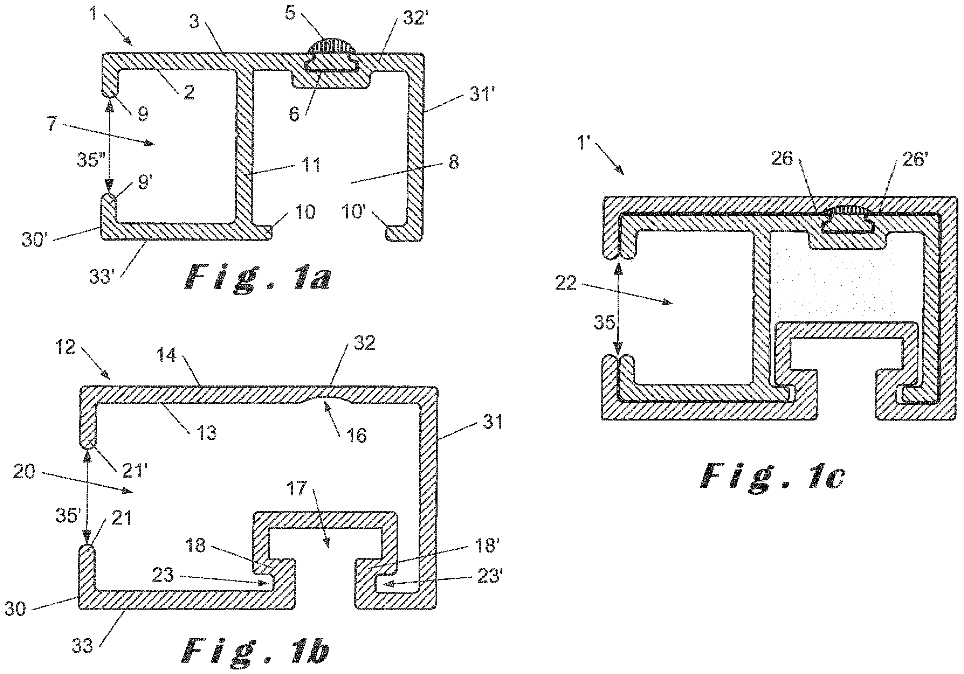

La figure 1 a illustre un profilé interne 1 d'un montant 1' d'un cadre, les parois de ce profilé interne 1 présentent une face interne 2 et une face externe 3. La paroi de connexion 32' est munie d'un balai 5 monté de façon amovible dans un évidement 6. En outre, ce profilé interne comprend une deuxième gorge 7 et une cinquième gorge 8 sensiblement en forme de U et séparées par une paroi 11, chacune de ces deux gorges 7, 8 étant munie de deux lèvres internes 9, 9' et 10, 10'. Les lèvres internes 9, 9', s'étendant chacune d'une des parois de connexion du profilé interne, forment un orifice longitudinal formant une ouverture 35" de la deuxième gorge 7 du profilé interne.

Les profilés sont de préférences réalisés en PVC ou en aluminium.

La figure 1b illustre un profilé externe 12 dont les parois présentent une face interne 13 et une face externe 14. La paroi de connexion 32 comprend sur sa face interne 13 une gouttière 16 agencée pour recevoir le balai 5 (illustré à la figure 1 a) du profilé interne 1. En outre, le profilé externe 12 comprend une troisième gorge en forme de U 17 comprenant éventuellement deux épaulements 18, 18' formés dans les parois latérales de ladite troisième gorge 17, ladite troisième gorge 17 étant située sur une paroi de connexion 33 opposée à la paroi de connexion 32 comprenant la gouttière 16. Par ailleurs, le profilé externe 12 présente une première gorge 20 sensiblement en forme de U. Deux lèvres internes 21, 21', s'étendant chacune d'une des parois de connexion du profilé externe, forment un orifice longitudinal formant une ouverture 35' de la première gorge 20 du profilé externe.

La figure 1c illustre un montant télescopique suivant l'invention dans lequel le profilé interne 1 est agencé pour coopérer par coulissement dans le profilé externe 12. Le balai 5 présent sur une paroi de connexion 32 du profilé interne 1 est accueilli par la gouttière 16 présente dans la paroi de connexion 32 du profilé externe 12 (sur sa face interne 13) de telle sorte que le balai 5 ne constitue pas une épaisseur responsable d'un jeu entre les profilés 1, 12. En outre, puisque le balai 5 est situé dans la gouttière 16, cette dernière forme un élément de guidage lors du coulissement du profilé interne 1 dans le profilé externe 12. Les lèvres internes 9 et 9' du profilé interne 1 s'accolent aux lèvres internes 21, 21' du profilé externe 12, le coulissement des deux profilés 1, 12 formant une gorge de superposition (22) au moins partielle de deux profilés comprenant un orifice longitudinal 35 formé par l'alignement au moins partiel du orifice longitudinal 35' présent sur la paroi frontale 30 dudit premier profilé 12 et du orifice longitudinal 35" présent sur la paroi frontale 30' du deuxième profilé 1. La gorge de superposition (22) au moins partielle de deux profilés est en outre agencée pour recevoir au moins partiellement une partie sensiblement périphérique d'un élément d'obturation 27, par exemple un bord une lisière d'une bâche (non illustré sur la figure 1 c).

Par ailleurs, les deux lèvres internes 10, 10' du profilé interne 1 se positionnent dans les rails longitudinaux 23, 23' formés par les épaulements 18, 18' présents au niveau de la troisième gorge en forme de U 17 du profilé externe 12. De cette façon, lorsqu'un moyen de blocage vis-écrou (non illustré) est utilisé et que, par serrage un écrou vient en butée contre les parties inférieures des épaulements, les lèvres 10, 10' du profilé interne 1 sont comprimées dans les rails longitudinaux 23, 23' de telle sorte que les deux profilés 1, 12 sont solidarisés temporairement. En outre, puisque le balai 5 se loge au moins partiellement dans la gouttière 16, le profilé interne 1 peut prendre appui contre le profilé externe 12 selon un contact étroit, le long de deux parties latérales 26, 26' de la face interne 13 de la paroi de connexion 32 du profilé 12, ces deux parties latérales 26, 26' étant situées de part et d'autre de la gouttière 16.

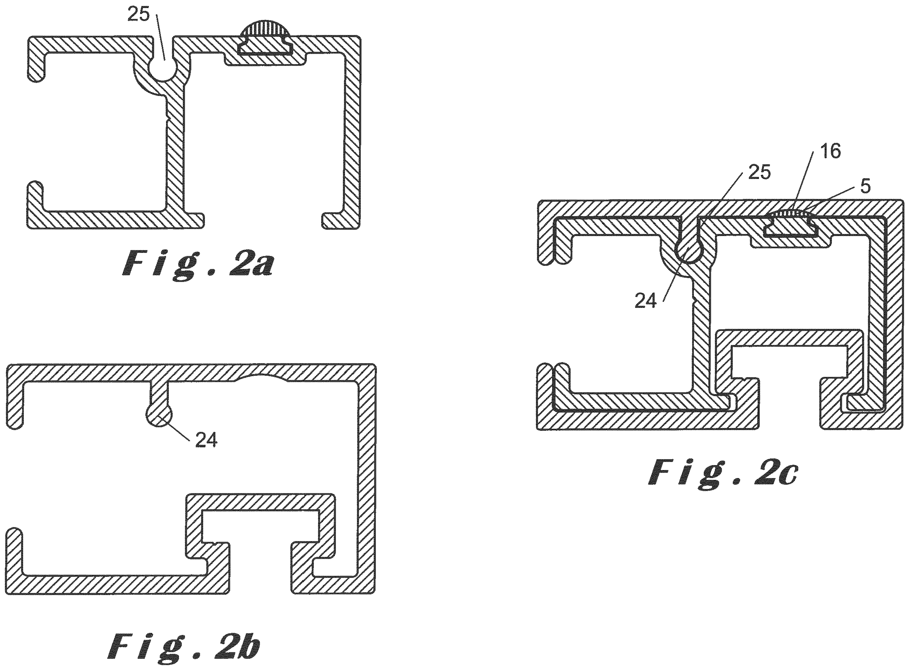

Les figures 2a à 2c illustrent un autre montant télescopique suivant l'invention. Les mêmes éléments que ceux repris aux figures 1 a à 1 c sont repris à la différence que le deuxième profilé externe 12 comprend un bourrelet 24 agencé pour être accueilli dans une cavité longitudinale d'emboitement 25 située sur le profilé interne 1. Comme illustré à la figure 1c, ce bourrelet 24 est inséré, par emboitement, dans la cavité longitudinale d'emboitement 25 qui sert d'élément de guidage lors du coulissement des profilés 1, 12. Cet emboitement permet en outre de rigidifier le montant télescopique mais aussi de minimiser le jeu entre les deux profilés 1, 12.

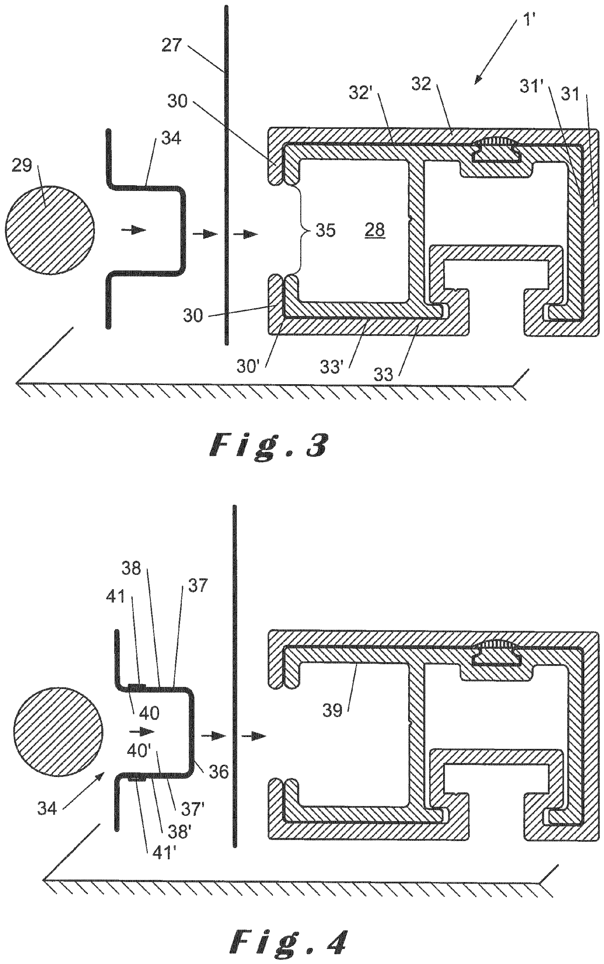

La figure 3 est une vue schématique en coupe du système d'obturation. Ce système est composé d'un élément d'obturation, par exemple d'une bâche 27 agencée pour couvrir l'ouverture, d'un premier moyen de fixation 28 présent sur le cadre, ainsi que d'un deuxième moyen de fixation 29. De préférence, l'élément d'obturation présente une fermeture à glissière.

Le premier moyen de fixation 28 est une ouverture définie par l'orifice longitudinal 35 de la gorge de superposition (22) moins partielle de deux profilés et la partie de lumière formant une cavité de la gorge de superposition (22) au moins partielle de deux profilés dans laquelle une partie sensiblement périphérique d'un élément d'obturation 27 est destinée à être logée. Le deuxième moyen de fixation 29 est un joint, par exemple de section circulaire.

Avantageusement, ledit joint est réalisé en un matériau souple et est agencé pour être fixé de manière ajustée entre les lèvres 9, 9' et 21, 21' de chaque profilés du montant télescopique définissant l'ouverture 35 de la gorge 22 et ainsi y fixer la partie sensiblement périphérique d'un élément d'obturation 27. De préférence, le joint 29 est constitué d'une pluralité de joints.

Le système d'obturation comprend en outre au moins un moyen de retenue 34 d'une partie sensiblement périphérique d'un élément d'obturation 27. Le moyen de retenue 34 présente un premier profil prédéterminé complémentaire à un deuxième profil prédéterminé formé par les lèvres 21, 21' et 9, 9' définissant l'ouverture 35 de la gorge 22, ce moyen de retenue 34 étant agencé pour être logé dans cette dernière, entre une partie sensiblement périphérique d'un élément d'obturation 27 et le joint 29, en superposition au-dessus de l'élément d'obturation. De cette façon, d'une part, une retenue dudit élément d'obturation 27 sur le cadre est assurée et, d'autre part, le moyen de retenue 34 est positionné de sorte qu'il puisse recevoir le joint 29, ce dernier présentant un troisième profil prédéterminé agencé pour coopérer avec le premier profil prédéterminé du moyen de retenue 34. De manière préférentielle, le moyen de retenue 34 est réalisé en un matériau rigide. Dans un mode de réalisation avantageux du système, le moyen de retenue 34 est avantageusement constitué d'une pluralité de moyens de retenue.

De préférence, le moyen de retenue 34 et le joint 29 forment un seul élément.

Dans une forme de réalisation particulièrement avantageuse du système telle qu'illustré à la figure 4, le moyen retenue 34 présente une paroi de fond 36 et deux parois latérales 37, 37' se faisant face de telle sorte que la section transversale dudit moyen de retenue 34 présente une forme sensiblement en U.

Chaque paroi latérale 37,37' du moyen de retenue 34 présente, une face externe 38, 38' orientée vers la face interne 39 de la gorge 22 du montant télescopique. D'autre part, chaque paroi latérale 37, 37' dudit moyen de retenue 34 présente sur une face externe 38, 38'au moins une protubérance 41, 41' orientée vers la face interne 39 de la gorge 22.

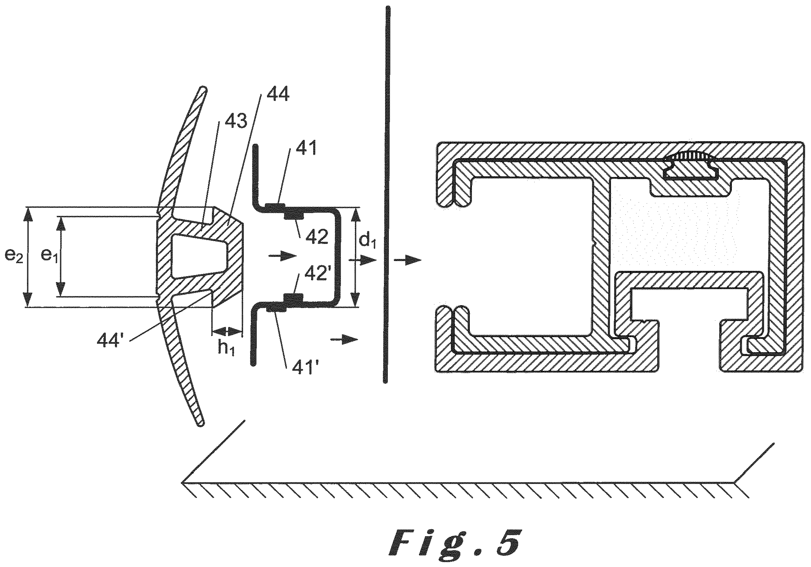

Dans un troisième mode de réalisation du système tel qu'illustré à la figure 5, chaque face interne 40, 40' de chaque paroi latérale 37, 37' du moyen de retenue 34 présente au moins une protubérance 42, 42' orientée dans une direction opposée à celle de la protubérance 41, 41' reliée à la face externe 38, 38' de chaque paroi latérale 37, 37'. En outre, le joint 29 présente une saillie longitudinale 43 d'une première épaisseur prédéterminée e1 et terminée par un premier et un deuxième épaulements 44, 44', d'une hauteur prédéterminée h1, pour former un ensemble d'une deuxième épaisseur e2 prédéterminée.

Les parois latérales 37, 37' du moyen de retenue 34 sont séparées l'une de l'autre par une distance prédéterminée d1, de sorte que d1 ≤ e2, chaque épaulement 44, 44' du joint étant agencé pour être placé entre la paroi de fond 36 du moyen de retenue et chaque protubérance des faces internes 40, 40' des parois latérales 37, 37' du moyen de retenue.

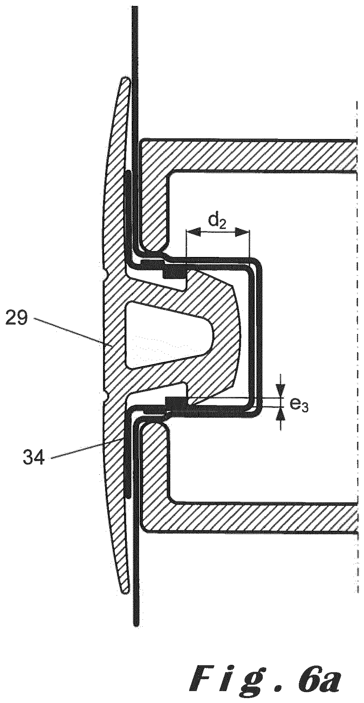

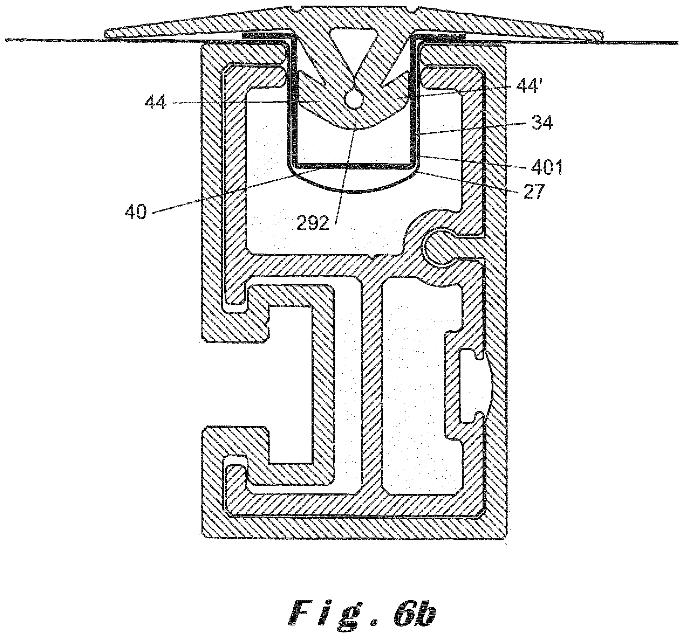

Avantageusement, chaque protubérance 42, 42' présente sur chaque face interne 40, 40' du moyen de retenue 34 est définie par une troisième épaisseur prédéterminée e3 et est placée à une deuxième distance prédéterminée d2 à partir de la paroi de fond 36 du moyen de retenue 34, de telle sorte que e3 ≥ e2 - e1 et/ou que de h1 ≥ d2 (figure 6).

Comme illustré à la figure 6a, les protubérances 41, 41' présentes sur les faces externes 38, 38' des parois latérales 37, 37' du moyen de retenue 34 sont agencées pour, lorsque le moyen de retenue 34 est logé dans la gorge 22 d'un montant télescopique 1', être en contact avec les lèvres internes 9, 9' et 21, 21' présentes sur chaque profilé 1, 12 du montant télescopique et formant une ouverture 35 à travers laquelle est inséré le moyen de retenue 34.

Eventuellement, dans un mode préférentiel de réalisation tel qu'illustré à la figure 6b, la saillie longitudinale 43 du joint 29 présente une coupe transversale en forme de pointe de flèche terminée par une extrémité distale 292 agencée pour être orientée vers le moyen de retenue 34. Chacun des premier et deuxième épaulements 44, 44' de la saillie longitudinale est destiné à être en contact avec chaque face interne 40, 40' du moyen de retenue lorsque le joint 29 est monté de manière ajustée dans le moyen de retenue 34.

Dans une forme de réalisation particulière, un premier et un deuxième montants 1', 1" du cadre adjacents sont emboités dans une pièce de jonction 45 en forme de L, de préférence au moins partiellement pleine, de telle façon que les montants soient non parallèles, en particulier sensiblement perpendiculaires.

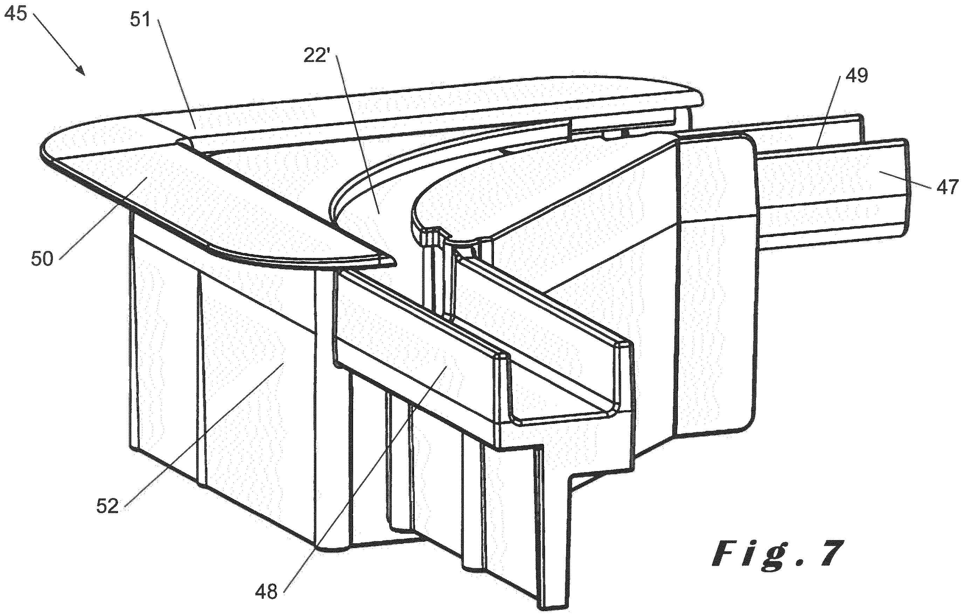

La figure 7 est une vue en perspective de la pièce de jonction 45 en forme de L.

Cette pièce de jonction 45 présente une première extrémité 46 et une deuxième extrémité 47. La pièce de jonction 45 est destinée à coopérer avec une paire de montants télescopiques adjacents 1', 1" du cadre. La première extrémité 46 de la pièce de jonction 45 est agencée pour être emboitée à une extrémité du premier profilé externe 12 d'un premier montant télescopique 1', tandis que la deuxième extrémité 47 de la pièce de jonction 45 est agencée pour être emboitée à une extrémité du deuxième profilé interne 1 d'un deuxième montant télescopique 1" adjacent au premier montant télescopique 1'.

La première extrémité 46 de la pièce de jonction 45 présente une première gorge longitudinale 48 agencée pour être logée, au moins partiellement, dans la gorge 20 du profilé externe 12 du premier montant 1' et former ainsi un premier moyen de couplage mutuel avec ce montant. La deuxième extrémité 47 de la pièce de jonction 45 présente une deuxième gorge longitudinale 49 destinée à être logée au moins partiellement dans la gorge 7 dudit profilé interne 1 et former ainsi un deuxième moyen de couplage mutuel avec ce montant. En outre, chacune des gorges de la pièce de jonction 45 étant agencée pour accueillir le joint 29, par-dessus une partie de l'élément d'obturation 27 superposé à la pièce de jonction 45.

Par ailleurs, chaque joint 29 est de préférence prolongé de sorte qu'une partie libre du joint du deuxième montant 1" soit superposée à une autre partie libre du joint du premier montant 1'. Dans ce contexte, chaque partie de joint libre est un moyen de préhension du joint. De cette façon, pour démonter l'élément d'obturation du cadre, il suffit à l'homme de métier de prendre la partie libre de chaque joint pour délogé les joint des gorges de la pièce de jonction et des montants adjacents dans lesquelles les joints sont logés.

La pièce de jonction est en outre caractérisée en ce qu'elle présente une bavette 50 sur une face frontale 51, cette bavette 50 étant agencée pour recouvrir, au moins partiellement, une face frontale 30 du premier profilé externe 12 du premier montant 1' télescopique et une face frontale 30' du deuxième profilé interne 1 du deuxième montant télescopique 1".

Selon un mode de réalisation, la pièce de jonction 45 présente une troisième gorge longitudinale 22' sur la face frontale 51 agencée pour relier la première 48 et la deuxième gorge 49 de la pièce de jonction et pour former une seule gorge continue.

Dans un mode préférentiel de réalisation de la pièce de jonction, au moins une des gorges longitudinales 48, 49 et 22' présente une ouverture formée par un orifice longitudinale défini par deux lèvres internes s'étendant chacune d'une des parois latérales de la gorge, le joint étant destiné à être tenu de manière ajustée par chaque lèvre de l'ouverture de la gorge dans laquelle la partie sensiblement périphérique de l'élément d'obturation est logée, et ainsi fixer cette partie de l'élément d'obturation au montant.

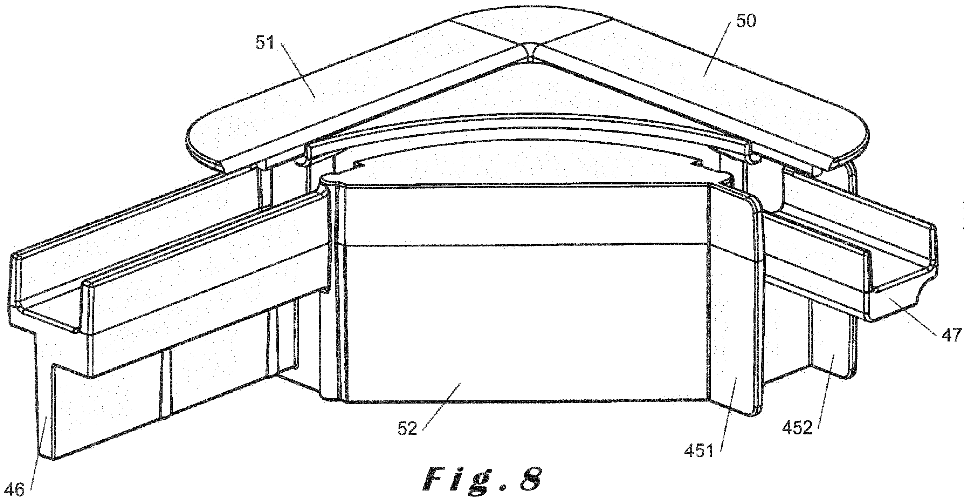

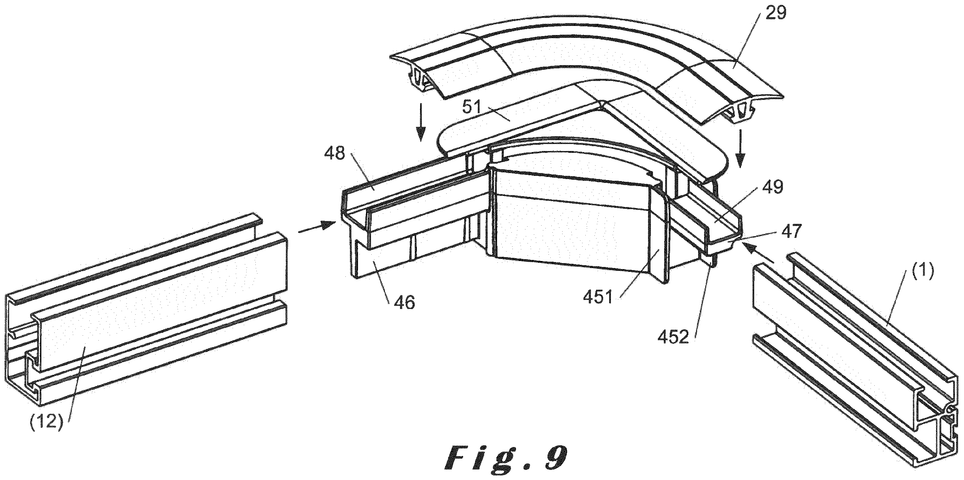

Dans un mode particulier de réalisation décrit aux figures 8 et 9, la pièce de jonction présente une paire de bavettes latérales 451, 452. Chaque bavette latérale 451, 452 est disposée de part et d'autre de la deuxième extrémité 47 de la pièce de jonction pour former un premier interstice entre cette deuxième extrémité 47 et une première bavette latérale 451, et un deuxième interstice, entre cette deuxième extrémité 47 et une deuxième bavette latérale 452. Chaque interstice est agencé pour accueillir de manière ajustée au moins une partie d'extrémité du deuxième profilé 1 interne du deuxième montant télescopique 1".

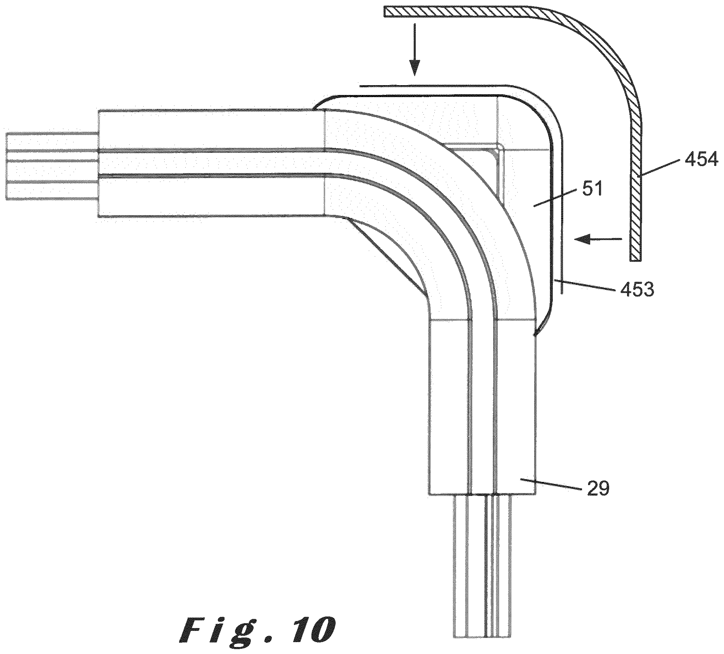

La figure 10 illustre un mode particulier de réalisation de la pièce de jonction. Dans ce mode particulier, la bavette frontale 50 présente une rainure frontale 453 agencée pour accueillir un joint frontal 454, par-dessus une partie dudit élément d'obturation 27.

Dans une variante, la pièce de jonction 45 comprend une troisième extrémité et présente une forme sensiblement en T. La première extrémité 46 est agencée pour être emboitée à une extrémité du premier profilé externe 12 du premier montant télescopique 1', la deuxième extrémité 47 de la pièce de jonction est agencée pour être emboitée à une extrémité du deuxième profilé interne 1 du deuxième montant 1" télescopique adjacent au premier montant 1' télescopique, le premier montant 1' étant sensiblement aligné au deuxième montant 1". La troisième extrémité est agencée pour être emboitée à une extrémité du premier profilé externe 12 ou du deuxième profilé interne 1 d'un troisième montant sensiblement perpendiculaire aux premier 1' et deuxième montants 1".

La pièce de jonction en T comprend, entre chaque extrémité, une partie pleine 52 agencée pour recevoir d'un premier coté, en butée, le profilé externe 12 du premier montant 1', d'un deuxième côté, en butée, le profilé interne 1 du deuxième montant 1", et d'un troisième côté, en butée, le profilé interne ou externe du troisième montant. De préférence, la partie pleine 52 est réalisée en un matériau souple, de type caoutchouteux.

Par ailleurs, la troisième extrémité de la pièce de jonction présente une troisième gorge longitudinale agencée pour être logée, au moins partiellement, dans la gorge du profilé externe 12 ou dans la gorge du profilé interne 1 du troisième montant.

La présence d'une pièce de jonction en T est particulièrement recommandée lorsque l'ouverture à obstruer présente de grandes dimensions, c'est-à-dire d'au moins 150 cm (ou un multiple d'au moins 150 cm) en largeur et d'au moins 150 cm (ou un multiple de 150 cm) en hauteur.

Cette ouverture présentant de grandes dimension, il est difficile pour l'homme du métier de mettre seul en place le système d'obturation afin à obturer avec un seul élément d'obturation cette ouverture. Dès lors, la présence d'une pièce de jonction en T permet de placer au moins un troisième montant, divisant l'ouverture définie par le cadre en deux ouvertures de plus petites tailles qui peuvent facilement être couverte chacune par un élément d'obturation.

Il est à noter que pour les ouvertures présentant une grande hauteur, c'est-à-dire au moins égale à 150 cm (ou à un multiple d'au moins 150 cm), plusieurs montants télescopiques peuvent être reliés deux à deux par une pièce de jonction présentant une première extrémité faisant face à une deuxième extrémité, de sorte que deux montants adjacents reliés à la même pièce de jonction soit alignés entre eux.

De préférence, le cadre est un système télescopique comprenant au moins quatre montants télescopiques. Le cadre est en outre agencé pour être positionné dans une ouverture, du type ouverture de porte ou de fenêtre délimitée par une huisserie ou de type délimitée par des murs adjacents, ledit système télescopique étant en outre agencé pour accueillir un élément d'obturation, par exemple une bâche, et comprenant en outre au moins quatre pièces de jonction, en particulier une pièce de coin, dans lesquelles deux montants adjacents perpendiculaires sont emboités.

Avantageusement, lesdits deux montants adjacents perpendiculaires emboités dans une pièce de jonction sont en outre reliés par un moyen de compensation, par exemple par un ressort plat.

La présence de ces moyens de compensation est particulièrement recommandée dans le cas où la rigidité du cadre n'est pas suffisante, il peut arriver que les montants flambent vers l'intérieur de l'ouverture. C'est particulièrement le cas pour des montants télescopiques formant un cadre agencé pour s'emboiter dans une ouverture présentant de grandes dimensions, par exemple, de dimension d'au moins 150 cm (ou un multiple d'au moins 150 cm) sur 150 cm (ou un multiple d'au moins 150 cm). En outre, pour maintenir chaque montant contre les côtés de l'ouverture, des moyens de compensation peuvent être mis en place. Ces derniers repoussent chaque montant contre les côtés de l'ouverture en vis-à-vis.

Chaque moyen de compensation est mis en place dans chaque coin du cadre et comporte une réglette flexible, par exemple du type réglette en acier ressort, encore appelée ressort plat, et deux moyens de fixation, par exemple du type système vis-écrou traversant la réglette, dont la vis traverse l'une des extrémités de la réglette pour se visser dans un écrou logé dans le montant considéré.

La réglette est alors disposée à l'intérieur du cadre en vis-à-vis d'une pièce de jonction. La réglette est fixée sur chacun des cadres adjacents de façon à être poussée dans le coin du cadre de manière à venir prendre une forme en arc de cercle dont le centre de courbure est orienté vers le centre de l'ouverture définie par le cadre.

De cette façon, les moyens de compensation créent un déploiement circulaire agissant sur chaque montant de sorte que l'emboitement de ces montants dans leur pièce de jonction est consolidé par l'action de poussée circulaire induite par la présence des réglettes, chacune placée en arc de cercle.

La réglette peut avoir par exemple une épaisseur comprise entre 1 mm et 2mm et une longueur comprise entre 60cm et 80cm.

Eventuellement, les moyens de fixation de chaque moyen de compensation comprennent une série d'au moins une fente présente sur chaque montant et dans laquelle chaque extrémité de la réglette est insérée.

Dans un mode préféré, pour les ouvertures présentant de grandes dimensions, c'est-à-dire une largueur et/ou une hauteur d'au moins 150 cm (ou d'un multiple d'au moins 150 cm), l'obturation de l'ouverture est effectuée en plaçant au moins deux cadres, l'un à la suite de l'autre, dans le sens de la longueur ou de la hauteur (ou les deux), chacun des deux cadres présentant deux paires de montants reliées les unes aux autres par quatre pièces de jonction en L. Dans ce contexte, chacun des cadres voisins présente alors un montant en contact avec un montant de l'autre cadre.

En particulier, l'homme du métier veillera à orienter les pièces de jonctions en L de sorte que deux pièces de jonctions voisines, appartenant chacune à un cadre distinct, soient agencées de façon à ce qu'une première extrémité 46 d'une première pièce de jonction 45 d'un premier cadre soit disposée de manière adjacente à une deuxième extrémité 47 d'une deuxième pièce de jonction 45' d'un deuxième cadre, de sorte que l'effet de poussée circulaire des ressorts placés sur le premier cadre compensent l'effet de poussée circulaire des ressorts placés sur le deuxième cadre, et ce, de manière à stabiliser les montants télescopiques dans une position de coulissement prédéterminée.

De manière optionnelle, des moyens de compensation additionnels peuvent être placés entre deux montants opposés de grande dimension afin de stabiliser le cadre.

La mise en place du système d'obturation, comprenant de préférence des montants télescopiques, comprend les étapes suivantes :
- une jonction entre deux montants adjacents par une pièce de jonction 45 pour fermer un cadre, la pièce de jonction 45 présentant une première extrémité 46 agencée pour être reliée à un premier montant 1', et une deuxième extrémité 47 agencée pour être reliée à un deuxième montant 1",
- un placement du cadre à l'intérieur d'une ouverture,
- un éventuel allongement des montants télescopiques par coulissement d'un profilé interne 1 dans un profilé externe 12 formant le montant télescopique, de manière à ce que les pièces de jonction 45 viennent en butée contre les coins de l'ouverture,
- un blocage des profilés interne 1 et externe 12 par serrage d'un moyen de blocage, suivi éventuellement d'un montage de moyens de compensation pour rigidifier le cadre,
- une insertion d'au moins une partie sensiblement périphérique d'un élément d'obturation 27 dans une gorge présente dans chaque montant ou dans une gorge formée par le coulissement d'une deuxième gorge (7) d'un deuxième profilé interne (1) dans une première gorge (20) d'un premier profilé externe (12) d'un montant télescopique, lorsque lesdits premier et deuxième profilés sont agencés pour coopérer par coulissement, et
- un positionnement ajusté d'au moins un joint 29 à travers l'ouverture de la gorge 22 de chaque montant pour y fixer la partie sensiblement périphérique de l'élément d'obturation, de sorte à former un système d'obturation de l'ouverture.
La mise en place du système d'obturation comprend en outre une étape préalable à celle de positionnement d'un joint 29, dans laquelle un moyen de retenue 34, présentant un premier profil prédéterminé complémentaire deuxième profil formé par les lèvres définissant ladite ouverture 35 de la gorge 22 et la partie de lumière formant la cavité de la gorge, est placé dans la gorge 22 entre la partie sensiblement périphérique 27 d'un élément d'obturation et le joint 29, en superposition au-dessus de ladite au moins une partie sensiblement périphérique 27 d'un élément d'obturation de façon à assurer une retenue de l'élément d'obturation sur le cadre et pour accueillir le joint 29 présentant un troisième profil prédéterminé agencé pour coopérer avec le premier profil prédéterminé du moyen de retenue 34.

Avantageusement, le procédé d'obturation est caractérisé en ce qu'il comprend, préalablement à l'étape de jonction d'au moins quatre montants deux à deux pour former le cadre, une étape de déploiement télescopique de chaque montant dudit cadre de manière à ce qu'au moins une pièce de jonction 45 vienne en butée contre un des coins de l'ouverture. Chaque montant est un montant télescopique comprenant un premier profilé externe 12, et un deuxième profilé interne 1 les premier et deuxième profilés étant agencés pour coopérer par coulissement.

Préférentiellement, l'étape de positionnement d'au moins un joint 29 dans la gorge 22 de chaque montant s'effectue à la fois dans la gorge 22 d'un montant du cadre et dans une gorge 48 présente sur la première extrémité 46 de la pièce de jonction 45, la gorge 48 de la première extrémité 46 de la pièce de jonction 45 étant de préférence agencée pour accueillir un moyen de retenue 34. De cette façon au moins une partie sensiblement périphérique de l'élément d'obturation 27 est reliée à la pièce de jonction 45.

Alternativement, ladite étape de positionnement d'au moins un joint 29 dans la gorge 22 de chaque montant s'effectue à la fois dans la gorge 22 d'un montant du cadre et dans une gorge 49 présente sur la deuxième extrémité 47 de la pièce de jonction 45, la gorge de la deuxième extrémité 47 de la pièce de jonction 45 étant également agencée pour accueillir un moyen de retenue 34.

Eventuellement, le procédé d'obturation comprend en outre une étape d'insertion de manière ajustée d'un joint frontal 454 dans une rainure frontale 453 disposée sur une bavette frontale 50 d'au moins une pièce de jonction, par-dessus une partie dudit élément d'obturation 27.

Dans le cadre de la présente invention il est bien entendu que l'ouverture n'est pas limitée à une ouverture définie par la huisserie mais comprend aussi une ouverture créée, de manière générale, par un périmètre défini par au moins quatre plans parallèles deux à deux. De préférence le périmètre est formé par quatre paire de plans sécants, par exemple, par paire de deux pans de mur opposés l'un à l'autre et reliés par un plafond et un sol.

De préférence, le cadre est relié aux pans de mur, au sol, et au plafond par la pose d'un joint provisoire, par exemple, d'une mousse expansible.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Montant télescopique (1') prévu pour être positionné dans une ouverture, du type ouverture de porte ou de fenêtre délimitée par une huisserie ou de type délimitée par des murs adjacents afin de former un montant d'un cadre agencé pour accueillir un élément d'obturation, par exemple une bâche (27), ledit montant télescopique comprenant :
- un premier profilé externe (12) comprenant une paroi frontale (30), une paroi dorsale (31) et deux parois de connexion (32, 33), chacune des parois présentant une face interne (13) et une face externe (14), ledit premier profilé (12) présentant une partie de lumière formant une cavité d'une première gorge (20) sensiblement en forme de U, ladite paroi frontale (30) comportant un orifice longitudinal formant une ouverture (35') de ladite première gorge (20) dont les parties adjacentes sont formées par deux lèvres internes (21, 21') s'étendant chacune d'une des parois de connexion (32, 33), et
- un deuxième profilé interne (1) comprenant une paroi frontale (30'), une paroi dorsale (31') et deux parois de connexion (32', 33'), chacune des parois présentant une face interne (2) et une face externe (3), ladite face externe (3) d'une desdites parois de connexion dudit deuxième profilé étant munie d'un balai (5) au moins partiellement sur sa longueur, ledit deuxième profilé (1) présentant une partie de lumière formant une cavité d'une deuxième gorge (7) sensiblement en forme de U, ladite paroi frontale (30') comportant un orifice longitudinal formant une ouverture (35") de ladite deuxième gorge (7) dont les parties adjacentes sont formées par deux lèvres internes (9, 9') s'étendant chacune d'une des parois de connexion (32', 33'),
lesdits premier (12) et deuxième (1) profilés étant concentriques et agencés pour coopérer par coulissement et ledit montant télescopique (1') étant **caractérisé en ce que** ledit premier profilé externe (12) comprend sur ladite face interne (13) d'une paroi faisant face à une desdites parois de connexion dudit profilé interne (1) une gouttière (16) formée dans une épaisseur de paroi et agencée pour recevoir ledit balai (5) situé sur ledit deuxième profilé (1) interne lorsque lesdits premier (12) et deuxième profilés (1) sont agencés pour coopérer par coulissement.

2. Montant télescopique selon la revendication 1, **caractérisé en ce que** ledit premier profilé externe (12) comprend en outre une troisième gorge en forme de U (17) comprenant deux épaulements (18, 18') formés dans des parois latérales de ladite troisième gorge (17) vers l'ouverture de ladite troisième gorge (17) et formant deux rails longitudinaux (23, 23') dont les ouvertures communiquent avec une autre partie de lumière dudit premier profilé externe (12), ladite troisième gorge (17) étant située sur une paroi de connexion opposée à celle comprenant ladite gouttière (16) et étant agencée pour recevoir un moyen de blocage.

3. Montant télescopique selon la revendication 2, **caractérisé en ce que** ledit moyen de blocage est un système vis-écrou.

4. Montant télescopique selon les revendications 2 ou 3, **caractérisé en ce que** ledit deuxième profilé interne (1) comprend deux lèvres (10, 10') agencées pour prendre respectivement appui dans lesdits rails longitudinaux (23, 23') formés par lesdits épaulements (18, 18') de ladite troisième gorge en forme de U (17) présente sur ledit premier profilé externe (12), lorsque lesdits premier (12) et deuxième (1) profilés sont agencés pour coopérer par coulissement.

5. Montant télescopique selon l'une quelconque des revendications 1 à 4, **caractérisé en ce que** ledit premier profilé externe (12) comprend un bourrelet (24) et **en ce que** ledit deuxième profilé interne (1) comprend au moins une cavité longitudinale (25) d'emboitement agencée pour recevoir ledit bourrelet (24) ou inversement, lorsque lesdits premier (12) et deuxième (1) profilés sont placés par coulissement de manière concentrique.

6. Montant télescopique selon l'une quelconque des revendications 1 à 5, **caractérisé en ce que** ledit balai (5) comporte une portion dorsale d'assemblage et est monté de façon amovible par positionnement de la portion dorsale dans un évidement (6) pratiqué dans une épaisseur de paroi sur une face interne (4) d'une des parois dudit deuxième profilé interne (1).

7. Montant télescopique selon l'une quelconque des revendications 1 à 6, **caractérisé en ce que** ledit premier (12) et/ou ledit deuxième profilé (1) comprend une pluralité de renforts reliant une première paire de leurs parois latérales.

8. Montant télescopique selon la revendication 7, **caractérisé en ce que** ledit premier (12) et/ou ledit deuxième profilé (1) comprend une pluralité de parois de renfort reliant une deuxième paire de leurs parois latérales.

9. Montant télescopique selon l'une quelconque des revendications 1 à 8, **caractérisé en ce que** ladite deuxième gorge (7) dudit deuxième profilé interne (1) et ladite première gorge (20) dudit premier profilé externe (12) forment, lorsque lesdits premier (12) et deuxième (1) profilés sont agencés pour coopérer par coulissement, une gorge de superposition (22) au moins partielle de deux profilés comprenant un orifice longitudinal (35) formé par l'alignement au moins partiel dudit orifice longitudinal (35') présent sur la paroi frontale (30) dudit premier profilé (12) et dudit orifice longitudinal (35") présent sur la paroi frontale (30') dudit deuxième profilé (1), ladite gorge de superposition (22) au moins partielle de deux profilés étant agencée pour recevoir et maintenir au moins partiellement une partie sensiblement périphérique d'un élément d'obturation (27), par exemple un bord d'une bâche.

10. Système télescopique comprenant au moins quatre montants télescopiques selon l'une quelconque des revendications 1 à 9, formant un cadre agencé pour être positionné dans une ouverture, du type ouverture de porte ou de fenêtre délimitée par une huisserie ou de type délimitée par des murs adjacents, ledit système télescopique étant en outre agencé pour accueillir un élément d'obturation, par exemple une bâche (27), et étant **caractérisé en ce qu'**il comprend en outre au moins quatre pièces de jonction (45), en particulier quatre pièces de coin, dans lesquelles deux montants adjacents perpendiculaires sont emboités.

11. Système télescopique selon la revendication 10, **caractérisé en ce que** lesdits deux montants adjacents perpendiculaires emboités dans une pièce de jonction, en particulier dans une pièce de coin, sont en outre reliés par un moyen de compensation, par exemple par un ressort plat.

## Patentansprüche

1. Teleskoppfeiler (1') zur Positionierung in einer Öffnung, einer Tür- oder Fensteröffnung, die durch ein Futter begrenzt wird oder durch angrenzende Mauern begrenzt wird, zur Bildung eines Pfeilers eines Rahmens, der zur Aufnahme eines Abdichtelements, beispielsweise einer Schutzabdeckung (27), angeordnet ist, wobei der Teleskoppfeiler Folgendes umfasst:
- ein erstes Außenprofil (12), das eine Vorderwand (30), eine Rückwand (31) und zwei Verbindungswände (32, 33) umfasst, wobei jede der Wände eine Innenseite (13) und eine Außenseite (14) aufweist, wobei das erste Profil (12) einen lichten Teil aufweist, der einen Hohlraum einer ersten Nut (20), die im Wesentlichen U-förmig ist, bildet, wobei die Vorderwand (30) einen Längsdurchlass umfasst, der eine Öffnung (35') der ersten Nut (20) bildet, deren benachbarte Teile durch zwei innere Lippen (21, 21') gebildet werden, die sich jeweils von einer der Verbindungswände (32, 33) erstrecken, und
- ein zweites Innenprofil (1), das eine Vorderwand (30'), eine Rückwand (31') und zwei Verbindungswände (32', 33') umfasst, wobei jede der Wände eine Innenseite (2) und eine Außenseite (3) aufweist, wobei die Außenseite (3) einer der Verbindungswände des zweiten Profils mindestens teilweise entlang ihrer Länge mit einer Bürste (5) versehen ist, wobei das zweite Profil (1) einen lichten Teil aufweist, der einen Hohlraum einer zweiten Nut (7), die im Wesentlichen U-förmig ist, bildet, wobei die Vorderwand (30') einen Längsdurchlass umfasst, der eine Öffnung (35") der zweiten Nut (7) bildet, deren benachbarte Teile durch zwei innere Lippen (9, 9') gebildet werden, die sich jeweils von einer der Verbindungswände (32', 33') erstrecken,
wobei das erste (12) und das zweite (1) Profil konzentrisch und zum gleitenden Zusammenwirken angeordnet sind und der Teleskoppfeiler (1') **dadurch gekennzeichnet ist, dass** das erste Außenprofil (12) auf der Innenseite (13) einer Wand, die einer der Verbindungswände des Innenprofils (1) gegenüberliegt, eine Rinne (16) umfasst, die in der Wandstärke ausgebildet ist und zur Aufnahme der Bürste (5), die sich auf dem zweiten Innenprofil (1) befindet, wenn das erste (12) und das zweite (1) Profil zum gleitenden Zusammenwirken angeordnet sind, angeordnet ist.

2. Teleskoppfeiler nach Anspruch 1, **dadurch gekennzeichnet, dass** das erste Außenprofil (12) des Weiteren eine dritte U-förmige Nut (17) umfasst, die zwei Schultern (18, 18') umfasst, die in den Seitenwänden der dritten Nut (17) zur Öffnung der dritten Nut (17) hin ausgebildet sind und zwei Längsschienen (23, 23') bilden, deren Öffnungen mit einem anderen lichten Teil des ersten Außenprofils (12) in Verbindung stehen, wobei sich die dritte Nut (17) in einer Verbindungswand befindet, die der die Rinne (16) umfassenden gegenüberliegt, und zur Aufnahme eines Sperrmittels angeordnet ist.

3. Teleskoppfeiler nach Anspruch 2, **dadurch gekennzeichnet, dass** es sich bei dem Sperrmittel um ein Schrauben-Mutter-System handelt.

4. Teleskoppfeiler nach den Ansprüchen 2 oder 3, **dadurch gekennzeichnet, dass** das zweite Innenprofil (1) zwei Lippen (10, 10') umfasst, die zur jeweiligen Anlage an den Längsschienen (23, 23'), die durch die Schultern (18, 18') der in dem ersten Außenprofil (12) vorliegenden dritten U-förmigen Nut (17) gebildet werden, wenn das erste (12) und das zweite (1) Profil zum gleitenden Zusammenwirken angeordnet sind, angeordnet sind.

5. Teleskoppfeiler nach einem der Ansprüche 1-4, **dadurch gekennzeichnet, dass** das erste Außenprofil (12) einen ersten Wulst (24) umfasst und dass das zweite Innenprofil (1) mindestens einen Einführlängshohlraum (25), der zur Aufnahme des Wulsts (24) angeordnet ist, umfasst oder umgekehrt, wenn das erste (12) und das zweite (1) Profil durch konzentrisches Gleiten platziert werden.

6. Teleskoppfeiler nach einem der Ansprüche 1-5, **dadurch gekennzeichnet, dass** die Bürste (5) einen Montagerückenabschnitt umfasst und in einer Aussparung (6), die in einer Wandstärke auf der Innenseite (4) einer der Wände des zweiten Innenprofils (1) ausgearbeitet ist, durch eine Positionierung des Rückenabschnitts beweglich befestigt ist.

7. Teleskoppfeiler nach einem der Ansprüche 1-6, **dadurch gekennzeichnet, dass** das erste (12) und/oder das zweite Profil (1) mehrere Verstärkungen umfassen, die ein erstes Paar ihrer Seitenwände verbinden.

8. Teleskoppfeiler nach Anspruch 7, **dadurch gekennzeichnet, dass** das erste (12) und/oder das zweite Profil (1) mehrere Verstärkungswände umfassen, die ein zweites Paar ihrer Seitenwände verbinden.

9. Teleskoppfeiler nach einem der Ansprüche 1-8, **dadurch gekennzeichnet, dass** die zweite Nut (7) des zweiten Innenprofils (1) und die erste Nut (20) des ersten Außenprofils (12) bei Anordnung des ersten (12) und des zweiten (1) Profils zum gleitenden Zusammenwirken eine Nut (22) zur zumindest teilweisen Überlagerung von zwei Profilen bilden, die einen Längsdurchlass (35) umfasst, der in zumindest teilweiser Ausrichtung auf den Längsdurchlass (35'), der in der Vorderwand (30) des ersten Profils (12) vorliegt, und auf den Längsdurchlass (35"), der in der Vorderwand (30') des zweiten Profils (1) vorliegt, ausgebildet ist, wobei die Nut (22) zur zumindest teilweisen Überlagerung von zwei Profilen zum zumindest teilweisen Aufnehmen und Halten eines im Wesentlichen umlaufenden Teils eines Abdichtelements (27), beispielsweise eines Rands einer Schutzabdeckung, angeordnet ist.

10. Teleskopsystem, das mindestens vier Teleskoppfeiler nach einem der Ansprüche 1-9 umfasst, die einen Rahmen bilden, der zur Positionierung in einer Öffnung, einer Tür- oder Fensteröffnung, die durch ein Futter begrenzt wird oder durch angrenzende Mauern begrenzt wird, angeordnet ist, wobei das Teleskopsystem des Weiteren zur Aufnahme eines Abdichtelements, beispielsweise einer Schutzabdeckung (27), angeordnet ist, und **dadurch gekennzeichnet ist, dass** es des Weiteren mindestens vier Verbindungsstücke (45), insbesondere vier Eckstücke, umfasst, in die zwei angrenzende senkrechte Pfeiler eingeführt sind.

11. Teleskopsystem nach Anspruch 10, **dadurch gekennzeichnet, dass** die beiden angrenzenden senkrechten Pfeiler, die in ein Verbindungsstück, insbesondere in ein Eckstück, eingeführt sind, des Weiteren durch ein Ausgleichsmittel, beispielsweise eine Flachfeder, verbunden sind.

## Claims

1. Telescopic post (1') designed to be positioned in an opening, such as a door- or window-type opening delimited by a casement, or of the type delimited by adjacent walls so as to form a post of a frame arranged so as to receive a sealing element, for example a tarpaulin (27), said telescopic post comprising:
- a first, outer profile (12) comprising a front wall (30), a rear wall (31) and two connecting walls (32, 33), each of the walls having an inner face (13) and an outer face (14), said first profile (12) having an open portion forming a cavity of a first, essentially U-shaped channel (20), said front wall (30) comprising a longitudinal orifice forming an opening (35') of said first channel (20), of which the adjacent portions are formed by two inner lips (21, 21'), each extending from one of the connecting walls (32, 33), and
- a second, inner profile (1) comprising a front wall (30'), a rear wall (31') and two connecting walls (32', 33'), each of the walls having an inner face (2) and an outer face (3), said outer face (3) of one of said connecting walls of said second profile being provided with a wiper (5) over at least part of its length, said second profile (1) having an open portion forming a cavity of a second, essentially U-shaped channel (7), said front wall (30') comprising a longitudinal orifice forming an opening (35") of said second channel (7), of which the adjacent portions are formed by two inner lips (9, 9'), each extending from one of the connecting walls (32', 33'),
said first (12) and second (1) profiles being concentric and arranged so as to engage by sliding, and said telescopic post (1') being **characterized in that** said first, outer profile (12) comprises, on said inner face (13) of a wall facing one of said connecting walls of said inner profile (1), a gutter (16) formed in a wall thickness and arranged so as to receive said wiper (5) located on said second, inner profile (1) when said first (12) and second (1) profiles are arranged so as to engage by sliding.

2. Telescopic post according to Claim 1, **characterized in that** said first, outer profile (12) further comprises a third U-shaped channel (17) comprising two shoulders (18, 18') formed in side walls of said third channel (17) towards the opening of said third channel (17) and forming two longitudinal rails (23, 23') of which the openings communicate with another open portion of said first, outer profile (12), said third channel (17) being located on a connecting wall opposite that comprising said gutter (16), and being arranged so as to receive an immobilizing means.

3. Telescopic post according to Claim 2, **characterized in that** said immobilizing means is a screw-and-nut system.

4. Telescopic post according to Claim 2 or 3, **characterized in that** said second, inner profile (1) comprises two lips (10, 10') which are arranged so as to be respectively supported in said longitudinal rails (23, 23') formed by said shoulders (18, 18') of said third U-shaped channel (17) present on said first, outer profile (12), wherein said first (12) and second (1) profiles are arranged so as to engage by sliding.

5. Telescopic post according to any one of Claims 1 to 4, **characterized in that** said first, outer profile (12) comprises a bead (24), and **in that** said second, inner profile (1) comprises at least one longitudinal slot-fitting cavity (25) arranged so as to receive said bead (24), or vice versa, when said first (12) and second (1) profiles are positioned by concentric sliding.

6. Telescopic post according to any one of Claims 1 to 5, **characterized in that** said wiper (5) comprises a dorsal assembly portion and is mounted removably by positioning the dorsal portion in a hollow (6) created in a wall thickness on an inner face (4) of one of the walls of said second, inner profile (1).

7. Telescopic post according to any one of Claims 1 to 6, **characterized in that** said first (12) and/or said second (1) profile comprises a plurality of reinforcements connecting a first pair of their side walls.

8. Telescopic post according to Claim 7, **characterized in that** said first (12) and/or said second (1) profile comprises a plurality of reinforcing walls connecting a second pair of their side walls.

9. Telescopic post according to any one of Claims 1 to 8, **characterized in that** said second channel (7) of said second, inner profile (1) and said first channel (20) of said first, outer profile (12) form, when said first (12) and second (1) profiles are arranged so as to engage by sliding, a channel (22) of at least partial superposition of two profiles comprising a longitudinal orifice (35) formed by the at least partial alignment of said longitudinal orifice (35') present on the front wall (30) of said first profile (12) and of said longitudinal orifice (35") present on the front wall (30') of said second profile (1), said channel (22) of at least partial superposition of two profiles being arranged so as to at least partially receive and hold an essentially peripheral portion of a sealing element (27), for example an edge of a tarpaulin.

10. Telescopic system comprising at least four telescopic posts according to any one of Claims 1 to 9, forming a frame that is arranged so as to be positioned in an opening, such as a door- or window-type opening delimited by a casement, or of the type delimited by adjacent walls, said telescopic system also being arranged so as to receive a sealing element, for example a tarpaulin (27), and being **characterized in that** it also comprises at least four joining parts (45), in particular four corner parts, into which two adjacent perpendicular posts are slotted.

11. Telescopic system according to Claim 10, **characterized in that** said two adjacent perpendicular posts slotted into a joining part, in particular into a corner part, are also connected by a compensating means, for example by a flat spring.
